# EUROPEAN PATENT SPECIFICATION

(11) **EP 4 435 585 B1**
(45) Date of publication and mention of the grant of the patent: **04.03.2026**
(21) Application number: 24702035.7
(22) Date of filing: 31.01.2024
(51) Int. Cl.: G06F 3/14, G06F 1/16, G06F 3/048, G02B 27/01, G06F 3/01, G06F 3/0482, G06F 3/04842

(54) **WEARABLE ELECTRONIC DEVICE COMPRISING PLURALITY OF DISPLAYS, AND METHOD FOR CONTROLLING SAME**
TRAGBARE ELEKTRONISCHE VORRICHTUNG MIT MEHREREN ANZEIGEN UND VERFAHREN ZUR STEUERUNG DAVON
DISPOSITIF ÉLECTRONIQUE À PORTER SUR SOI COMPRENANT UNE PLURALITÉ DE DISPOSITIFS D'AFFICHAGE, ET SON PROCÉDÉ DE COMMANDE

(30) Priority: 06.02.2023 KR 20230015543; 21.02.2023 KR 20230023194
(43) Date of publication of application: 25.09.2024
(73) Proprietor: Samsung Electronics Co., Ltd., Suwon-si, Gyeonggi-do 16677 (KR)
(72) Inventor: OH, Sejeong, Suwon-si, Gyeonggi-do 16677 (KR); EOM, Kihun, Suwon-si, Gyeonggi-do 16677 (KR)
(74) Representative: Gulde & Partner
(86) International application number: PCT/KR2024/001467
(87) International publication number: WO 2024/167211

(56) References cited:
- CN-A- 113 985 610
- CN-A- 114 442 321
- CN-A- 114 660 814
- KR-A- 20170 044 296
- KR-A- 20180 002 387
- KR-A- 20220 093 332
- KR-A- 20220 149 636
- US-A1- 2021 132 397
- US-B1- 10 674 141
- US-B2- 10 261 573

## Description

### [Technical Field]

Embodiments of the disclosure relate to a wearable electronic device including a plurality of displays and a method for controlling the same.

### [Background Art]

More and more services and additional functions are being provided through electronic devices, e.g., smartphones, or other portable electronic devices. To meet the needs of various users and raise use efficiency of electronic devices, communication service carriers or device manufacturers are jumping into competitions to develop electronic devices with differentiated and diversified functionalities. Accordingly, various functions that are provided through electronic devices are evolving more and more.

To provide a comfortable field of view and clear images to the user by a head mounted device (HMD) as a method for providing virtual reality (VR), augmented reality (AR), and mixed reality (MR) technology to the user, it is required that the distance between the display corresponding to the left eye and the display corresponding to the right eye match the inter-pupillary distance (IPD) and that the screen corresponding to the inter-pupillary distance (IPD) be displayed on each display.

The inter-pupillary distance varies depending on race, body shape, etc., and thus, the distance between displays suitable for each user is different, and many HMD devices adopt a mechanical method to allow the user herself to set the inter-display distance. Even when the user herself sets the inter-display distance to fit her eyes, if the device fails to display the screen according to the current inter-display distance, a blurry image may be provided to the user, resulting in dizziness or increased eye fatigue.

The above-described information may be provided as related art for the purpose of helping understanding of the disclosure. No claim or determination is made as to whether any of the foregoing is applicable as background art in relation to the disclosure.

A publication of US 2021/0132397 A1 discloses a head-mounted display assemblies and related methods for interpupillary distance adjustments. Further, US 10,674,141 B1 concerns determining a positional relationship between a pair of display assemblies based on the emissions measured by the at least one position sensor to detect interpupillary distances and configure the pair of display assemblies. Additionally, US 10,261,573 B2 discloses detecting magnetic force and based on the detection identifying an angle or distance between two displays. CN 114 442 321 A defines adjusting a position where a display screen displays a first image and a second image according to a determined center distance. CN 114 660 814 A discloses a head-mounted display device including an interpupillary distance adjustment assembly, a photoelectric module, and a control module, wherein the interpupillary distance adjustment assembly includes an operation knob, a photoelectric encoder wheel, and a transmission mechanism, and the operation knob can drive the photoelectric encoder wheel to rotate, to adjust the distance between two lens barrels through the transmission mechanism. Lastly, CN 113 985 610 A concerns obtaining a target distance of each of the lens barrels according to the interpupillary distance and controlling a driving motor to drive a rotating shaft to rotate so that each of the lens barrels is set according to the target distance.

### [Disclosure of Invention]

### [Solution to Problems]

A first object of the present invention is a wearable electronic device, comprising: a hall sensor; a magnet; a first display; a second display disposed side by side with the first display; at least one processor; and a memory storing instructions; wherein the magnet is configured to be movable in a first direction parallel to a direction in which the first display and the second display are disposed, within a specified range with respect to the hall sensor, wherein the first display and the second display are interlocked with the magnet such that the position of the magnet and the distance between the display and the second display are interdependent, wherein the instructions are configured to, when executed by the at least one processor, cause to the wearable electronic device to: obtain magnetic force data in a plurality of directions through the hall sensor while the magnet moves from a first end to a second end of the specified range; and obtain relationship information between magnetic force data in the plurality of directions and a distance between the first display and the second display, based on magnetic force data in the first direction and magnetic force data in a second direction among the magnetic force data in the plurality of directions.

Preferably, based on the magnet being positioned at the first end, the first display and the second display are disposed so that the distance between the first display and the second display is the shortest, wherein based on the magnet being positioned at the second end, the first display and the second display are disposed so that the distance between the first display and the second display is the longest, and wherein the position of the magnet is changed by a motor.

Preferably, the instructions are configured to, when executed by the at least one processor, cause the wearable electronic device to obtain the relationship information between the magnetic force data in the plurality of directions and the distance between the first display and the second display, based on magnetic force data in a direction in which a variation of magnetic force data is larger among the magnetic force data in the first direction and the magnetic force data in the second direction.

Preferably, the first direction is an x-axis direction, and the second direction is a z-axis direction from an inside of the wearable electronic device to an outside of the wearable electronic device.

Preferably, the instructions are configured to, when executed by the at least one processor, cause the wearable electronic device to perform a first correction on magnetic force data in the x-axis direction among the magnetic force data in the plurality of directions so that the magnetic force data in the x-axis direction becomes 0 when the magnet is positioned in a center of the hall sensor.

Preferably, the instructions are configured to, when executed by the at least one processor, cause the wearable electronic device to perform a second correction by, with respect to x-axis, symmetrically moving a section, in which a variation of the magnetic force data is a negative number, of the first-corrected magnetic force data in the x-axis direction.

Preferably, the instructions are configured to, when executed by the at least one processor, cause the wearable electronic device to: compare a variation in the second-corrected magnetic force data in the x-axis direction and a variation in magnetic force data in the z-axis direction; and obtain the relationship information of the distance between the first display and the second display, based on magnetic force data in a direction in which a variation of magnetic force data is larger, among the second-corrected magnetic force data in the x-axis direction and the magnetic force data in the z-axis direction.

Preferably, the instructions are configured to, when executed by the at least one processor, cause the wearable electronic device to use the magnetic force data in the plurality of directions for updating the relationship, obtained while the magnet moves from the first end to the second end of the specified range, in response to receiving a user input for updating the relationship information between magnetic force data in the plurality of directions and the distance between the first display and the second display.

Preferably, the instructions are configured to, when executed by the at least one processor, cause the wearable electronic device to display a guide user interface, UI, for updating the relationship information on the first display and/or the second display in response to receiving the user input.

Preferably, the instructions are configured to, when executed by the at least one processor, cause the wearable electronic device to: detect magnetic force data through the hall sensor in response to the distance between the first display and the second display being adjusted by a user input; obtain the adjusted distance between the first display and the second display based on the detected magnetic force data and the obtained relationship information; and display an image on the first display and/or the second display based on the adjusted distance.

A second aspect of the present invention is a method for controlling a wearable electronic device comprising: a hall sensor; a magnet; a first display; a second display disposed side by side with the first display; at least one processor; and a memory storing instructions; wherein the magnet is configured to be movable in a first direction parallel to a direction in which the first display and the second display are disposed, within a specified range with respect to the hall sensor, wherein the first display and the second display are interlocked with the magnet such that the position of the magnet and the distance between the display and the second display are interdependent, wherein the method comprises: obtaining, while a magnet of the wearable electronic device moves from a first end to a second end of a specified range with respect to a hall sensor of the wearable electronic device, magnetic force data in a plurality of directions through the hall sensor; and obtaining relationship information between magnetic force data in the plurality of directions and the distance between the first display and the second display, based on magnetic force data in the first direction and magnetic force data in a second direction among the magnetic force data in the plurality of directions.

Preferably, based on the magnet being positioned at the first end, the first display and the second display are disposed so that the distance between the first display and the second display is the shortest, wherein based on the magnet being positioned at the second end, the first display and the second display are disposed so that the distance between the first display and the second display is the longest, and wherein the position of the magnet is changed by a motor.

Preferably, obtaining the relationship information between the magnetic force data and the distance between the first display and the second display includes obtaining the relationship information between the magnetic force data in the plurality of directions and the distance between the first display and the second display, based on magnetic force data in a direction in which a variation of magnetic force data is larger among the magnetic force data in the first direction and the magnetic force data in the second direction.

Preferably, the first direction is an x-axis direction, and the second direction is a z-axis direction from an inside of the wearable electronic device to an outside of the wearable electronic device.

Preferably, the method further comprises performing first correction on magnetic force data in the x-axis direction among the magnetic force data in the plurality of directions so that the magnetic force data in the x-axis direction becomes 0 when the magnet is positioned in a center of the hall sensor.

### [Brief Description of Drawings]

FIG. 1 is a block diagram illustrating an electronic device in a network environment according to an embodiment;
FIG. 2 is a perspective view illustrating an internal configuration of a wearable electronic device according to an embodiment;
FIG. 3A is a front view illustrating a wearable electronic device according to an embodiment;
FIG. 3B is a rear view illustrating a wearable electronic device according to an embodiment;
FIG. 4 is another perspective view illustrating a wearable electronic device according to an embodiment;
FIG. 5A is a view illustrating repositioning of a plurality of displays corresponding to repositioning of a hall sensor or a magnet of a wearable electronic device according to an embodiment;
FIG. 5B is a view illustrating repositioning of a plurality of displays respectively corresponding to repositioning of a plurality of hall sensors or a plurality of magnets of a wearable electronic device according to an embodiment;
FIG. 6A is a view illustrating an arrangement of a plurality of displays when a magnet is positioned at a first end of a movable distance according to an embodiment;
FIG. 6B is a view illustrating an arrangement of a plurality of displays when a magnet is positioned in the center of a movable distance according to an embodiment;
FIG. 6C is a view illustrating an arrangement of a plurality of displays when a magnet is positioned at a second end of a movable distance according to an embodiment;
FIG. 6D is a view illustrating an arrangement of a plurality of displays respectively corresponding to positions of magnets when a plurality of magnets respectively correspond to a plurality of displays according to an embodiment;
FIG. 7 is a flowchart illustrating an operation of obtaining relationship information between magnetic force data of a wearable electronic device and a plurality of displays according to an embodiment;
FIG. 8 is a flowchart illustrating an operation of obtaining magnetic force data of a wearable electronic device according to an embodiment;
FIG. 9 is a view illustrating magnetic force data in a plurality of directions, obtained based on a hall sensor or magnet movement according to an embodiment;
FIG. 10A is a view illustrating magnetic force data corrected so that magnetic force data in an x-axis direction becomes 0 when a magnet is positioned in the center of a movable distance according to an embodiment;
FIG. 10B is a view illustrating magnetic force data corrected so that a section in which a variation in magnetic force data in an x-axis direction is a negative number is moved symmetrically on the x axis according to an embodiment;
FIG. 11 is a view illustrating a result of comparison in variation between the corrected magnetic force data in an x-axis direction of FIG. 10B and magnetic force data in a z-axis direction;
FIG. 12 is a flowchart illustrating an operation of calculating a distance between a plurality of displays based on magnetic force data in a direction in which a variation is large in a wearable electronic device according to an embodiment;
FIG. 13 is a view illustrating a user interface (UI) provided based on a user input for updating relationship information between a plurality of displays and magnetic force data of a wearable electronic device according to an embodiment;
FIG. 14 is a view illustrating a user interface (UI) provided based on a user input for updating relationship information between a plurality of displays and magnetic force data of a wearable electronic device according to an embodiment; and
FIG. 15 is a view illustrating a user interface (UI) provided based on a user input for updating relationship information between a plurality of displays and magnetic force data of a wearable electronic device according to an embodiment.

### [Mode for the Invention]

Embodiments of the present invention are now described with reference to the accompanying drawings in such a detailed manner as to be easily practiced by one of ordinary skill in the art. However, the disclosure may be implemented in other various forms and is not limited to the embodiments set forth herein. The same or similar reference denotations may be used to refer to the same or similar elements throughout the specification and the drawings. Further, for clarity and brevity, no description is made of well-known functions and configurations in the drawings and relevant descriptions.

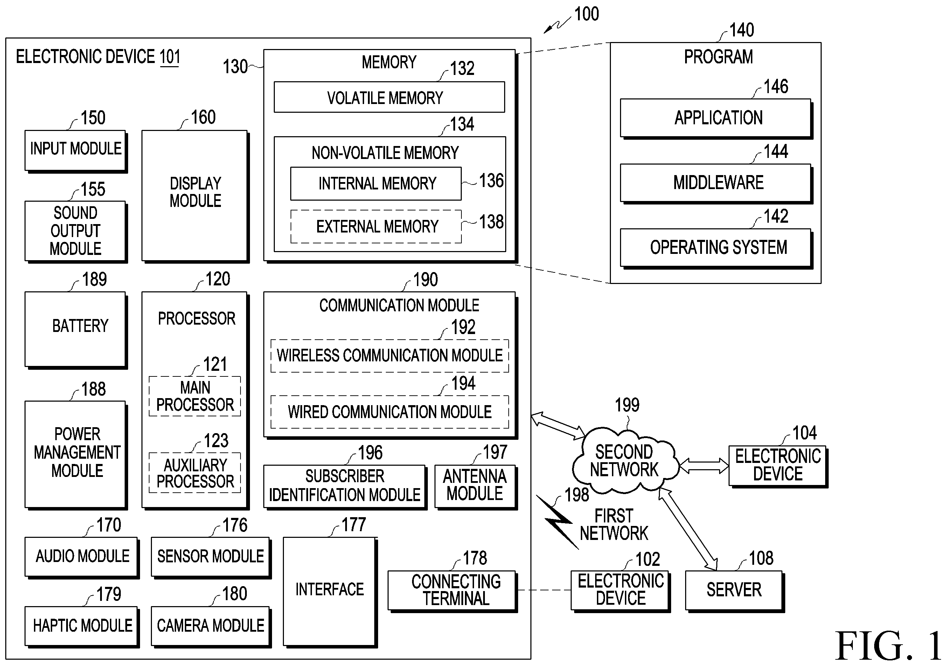

FIG. 1 is a block diagram illustrating an electronic device 101 in a network environment 100 according to an embodiment. Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal According to an embodiment, the display module 160 may include a first display module 351 corresponding to the user's left eye and/or a second display module 353 corresponding to the user's right eye., a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductive body or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or loT-related technology.

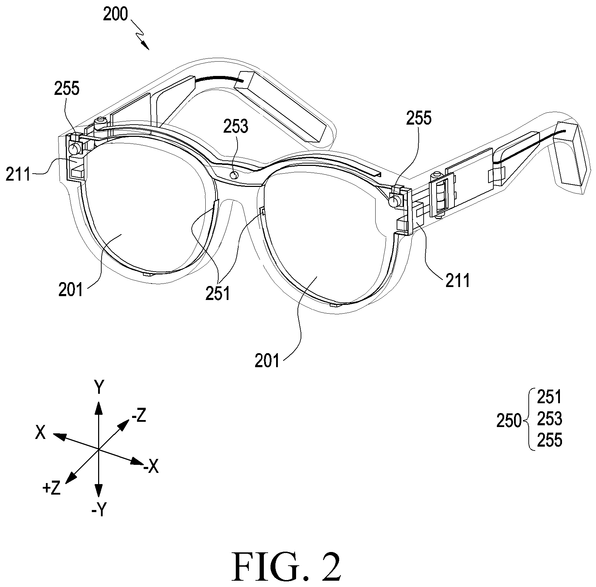

FIG. 2 is a perspective view illustrating an internal configuration of a wearable electronic device according to an embodiment.

Referring to FIG. 2, a wearable electronic device 200 according to an embodiment may include at least one of the following: a light output module 211, a display member 201, a camera module 250. For example, the electronic device 200 may include at least some or all of the components of the electronic device 101 as described above with reference to FIG. 1.

According to an embodiment, the light output module 211 may include a light source capable of outputting an image and a lens guiding the image to the display member 201. According to an embodiment, the light output module 211 may include at least one of the following: a liquid crystal display (LCD), a digital mirror device (DMD), a liquid crystal on silicon (LCoS), an organic light emitting diode (OLED), a micro light emitting diode (micro LED).

According to an embodiment, the display member 201 may include an optical waveguide (e.g., a waveguide). According to an embodiment, the image output from the light output module 211 incident on one end of the optical waveguide may propagate inside the optical waveguide and be provided to the user. According to an embodiment, the optical waveguide may include at least one of at least one diffractive element (e.g., a diffractive optical element (DOE) or a holographic optical element (HOE)) or a reflective element (e.g., a reflective mirror). For example, the optical waveguide may guide the image output from the light output module 211 to the user's eyes using at least one diffractive element or reflective element.

According to an embodiment, the camera module 250 may capture a still image and/or a video. According to an embodiment, the camera module 250 may be disposed in a lens frame and may be disposed around the display member 201.

According to an embodiment, a first camera module 251 may capture and/or recognize the trajectory of the user's eye (e.g., pupil or iris) or gaze. According to an embodiment, the first camera module 251 may periodically or aperiodically transmit information related to the trajectory of the user's eye or gaze (e.g., trajectory information) to the processor (e.g., the processor 120 of FIG. 1).

According to an embodiment, the second camera module 253 may capture an external image.

According to an embodiment, a third camera module 255 may be used for hand detection and tracking, and recognition of the user's gesture (e.g., hand motion). According to an embodiment, the third camera module 255 may be used for 3 degrees of freedom (3DoF) or 6DoF head tracking, location (space, environment) recognition and/or movement recognition. The second camera module 253 may also be used for hand detection and tracking and recognition of the user's gesture according to an embodiment. According to an embodiment, at least one of the first camera module 251 to the third camera module 255 may be replaced with a sensor module (e.g., a LiDAR sensor). For example, the sensor module may include at least one of the following: a vertical cavity surface emitting laser (VCSEL), an infrared sensor, a photodiode.

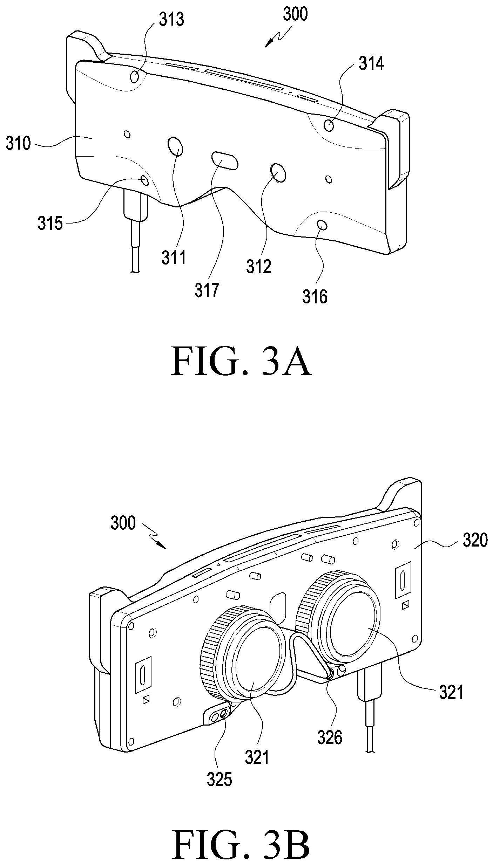

FIG. 3A is a front view illustrating a wearable electronic device according to an embodiment.

FIG. 3B is a rear view illustrating a wearable electronic device according to an embodiment.

Referring to FIGS. 3A and 3B, in an embodiment, camera modules 311, 312, 313, 314, 315, and 316 and/or a depth sensor 317 for obtaining information related to the ambient environment of the wearable electronic device 300 may be disposed on the first surface 310 of the housing.

In an embodiment, the camera modules 311 and 312 may obtain images related to the ambient environment of the wearable electronic device.

In an embodiment, the camera modules 313, 314, 315, and 316 may obtain images while the wearable electronic device is worn by the user. The camera modules 313, 314, 315, and 316 may be used for hand detection, tracking, and recognition of the user gesture (e.g., hand motion). The camera modules 313, 314, 315, and 316 may be used for 3DoF or 6DoF head tracking, location (space or environment) recognition, and/or movement recognition. In an embodiment, the camera modules 311 and 312 may be used for hand detection and tracking and recognition of the user's gesture.

In an embodiment, the depth sensor 317 may be configured to transmit a signal and receive a signal reflected from an object and be used for identifying the distance to the object, such as time of flight (TOF). Alternatively or additionally to the depth sensor 317, the camera modules 313, 314, 315, and 316 may identify the distance to the object.

According to an embodiment, camera modules 325 and 326 for face recognition and/or a display 321 (and/or lens) may be disposed on the second surface 320 of the housing.

In an embodiment, the face recognition camera modules 325 and 326 adjacent to the display may be used for recognizing the user's face or may recognize and/or track both eyes of the user.

In an embodiment, the display 321 (and/or lens) may be disposed on the second surface 320 of the wearable electronic device 300. In an embodiment, the wearable electronic device 300 may not include the camera modules 315 and 316 among the plurality of camera modules 313, 314, 315, and 316. Although not shown in FIGS. 3A and 3B, the wearable electronic device 300 may further include at least one of the components shown in FIG. 2.

As described above, according to an embodiment, the wearable electronic device 300 may have a form factor to be worn on the user's head. The wearable electronic device 300 may further include a strap and/or a wearing member to be fixed on the user's body part. The wearable electronic device 300 may provide the user experience based on augmented reality, virtual reality, and/or mixed reality while worn on the user's head.

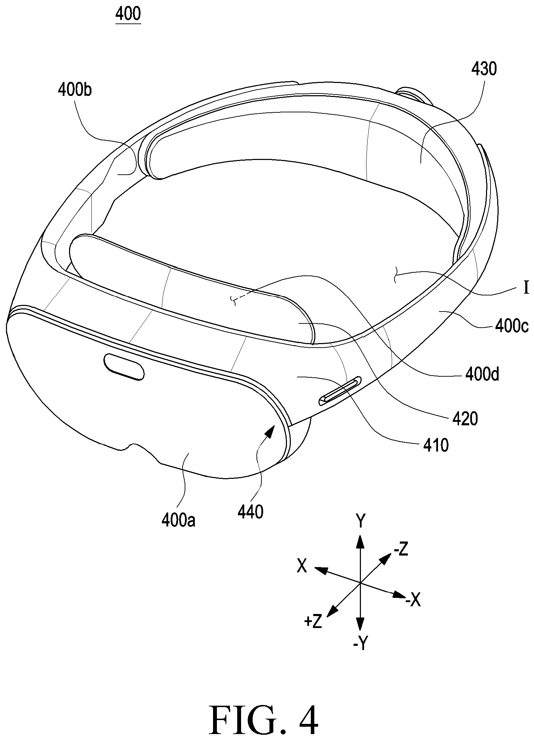

FIG. 4 is another perspective view illustrating an electronic device according to an embodiment.

Referring to FIG. 4, an electronic device 400 may be a head mounting device (HMD) capable of providing an image in front of the user's eyes. The configuration of the electronic device 400 of FIG. 4 may be identical in whole or part to the configuration of the electronic device 200 of FIG. 2.

According to an embodiment, the electronic device 400 may form the exterior of the electronic device 400 and may include housings 410, 420, and 430 that may provide a space in which components of the electronic device 400 may be disposed.

According to an embodiment, the electronic device 400 may include a first housing 410 that may surround at least a portion of the user's head. According to an embodiment, the first housing 410 may include a first surface 400a facing the outside (e.g., +Z direction) of the electronic device 400.

According to an embodiment, the first housing 410 may surround at least a portion of the inner space I. For example, the first housing 410 may include a second surface 400b facing the inner space I of the electronic device 400 and a third surface 400c opposite to the second surface 400b. According to an embodiment, the first housing 410 may be coupled with the third housing 430 and may be formed in a closed loop shape surrounding the inner space I.

According to an embodiment, the first housing 410 may surround at least some of the components of the electronic device 400. For example, a light output module and a circuit board may be disposed within the first housing 410.

According to an embodiment, the electronic device 400 may include one display member 440 corresponding to the left eye and the right eye. The display member 440 may be disposed in the first housing 410. The configuration of the display member 440 of FIG. 4 may be identical in whole or part to the configuration of the display member 201 of FIG. 2.

According to an embodiment, the electronic device 400 may include a second housing 420 that may be seated on the user's face. According to an embodiment, the second housing 420 may include a fourth surface 400d that may at least partially face the user's face. According to an embodiment, the fourth surface 400d may be a surface in a direction (e.g., -Z direction) toward the internal space I of the electronic device 400. According to an embodiment, the second housing 420 may be coupled with the first housing 410.

According to an embodiment, the electronic device 400 may include a third housing 430 that may be seated on the back of the user's head. According to an embodiment, the third housing 430 may be coupled with the first housing 410. According to an embodiment, the third housing 430 may surround at least some of the components of the electronic device 400. For example, a battery (e.g., the battery 189 of FIG. 1) may be disposed in the third housing 430.

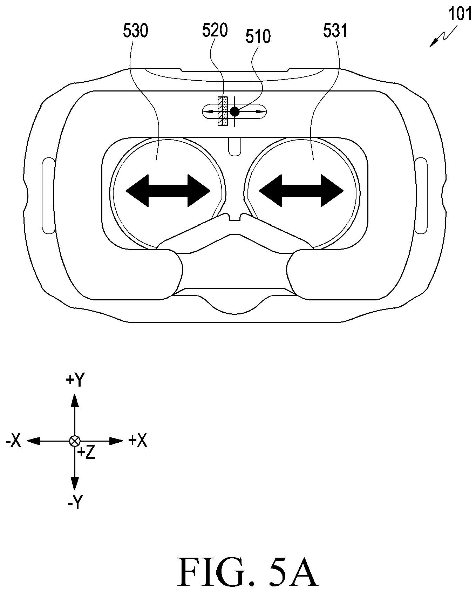

FIG. 5A is a view illustrating repositioning of a plurality of displays corresponding to repositioning of a hall sensor or a magnet according to an embodiment.

Referring to FIG. 5A, the wearable electronic device 101 (e.g., the electronic device 101 of FIG. 1) may include a hall sensor 510 (e.g., the sensor module 176 of FIG. 1), a magnet 520, and a plurality of displays 530 and 531. According to an embodiment, the wearable electronic device 101 may be glasses including a plurality of displays or a head mounted display device.

According to an embodiment, the hall sensor 510 may sense magnetic force data by the magnet 520 and may be fixed to an area of the head mounted display device 101.

According to an embodiment, the magnet 520 may linearly move, and the center of the movable distance may be positioned on the same axis as the center of the hall sensor 510. For example, the magnet 520 may move in the +x direction or the -x direction through a jig disposed in the x-axis direction. According to an embodiment, the y coordinate and/or z coordinate of the center of the movable distance of the magnet 520 and the center of the hall sensor 510 may be different, but the x coordinates thereof may be substantially the same.

According to an embodiment, the first display 530 may be a display corresponding to the left eye, and the second display 531 may be a display corresponding to the right eye. According to an embodiment, the distance between the first display 530 and the second display 531 may be adjusted in the x-axis direction. According to an embodiment, the first display 530 and the second display 531 may be movable in a direction substantially parallel to the moving direction of the magnet 520.

According to an embodiment, the distance between the first display 530 and the second display 531 may be adjusted based on the position of the magnet 520. For example, the first display 530 and the second display 531 may simultaneously move toward the center or may simultaneously move toward the outside, based on the position of the magnet 520.

According to one embodiment, the jig on which the magnet 520 moves and the gear rack on which the first display 530 and the second display 531 move are mechanically interlocked, so that the position of the magnet 520 and the distance between the display 530 and the second display 531 may be interdependent.

According to one embodiment, as an external force is applied to the magnet 520 and the magnet 520 moves, the distance between the first display 530 and the second display 531 may change, and as an external force is applied to the first display 530 and the second display and moved, the first display 530 and the second display move, the magnet 520 may be moved.

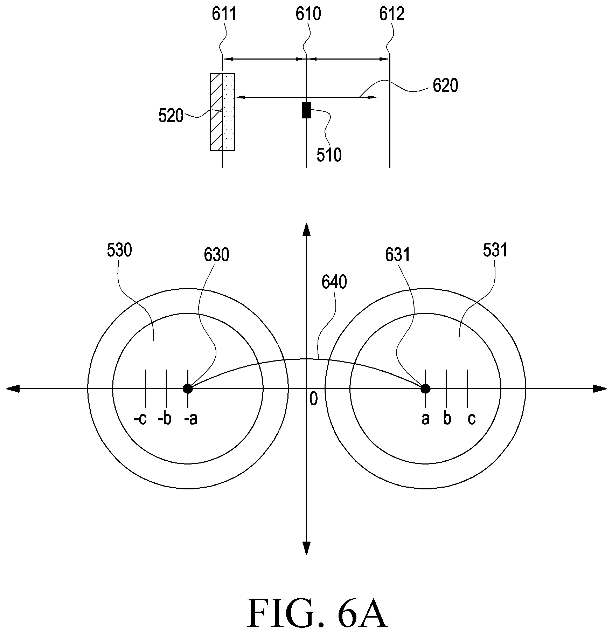

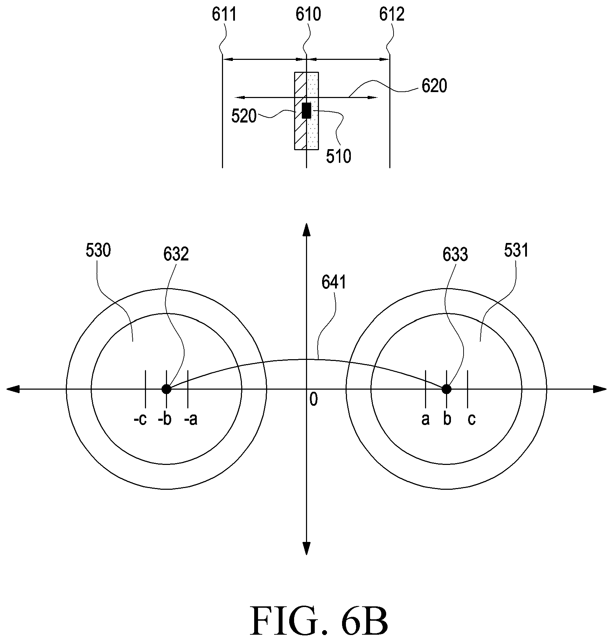

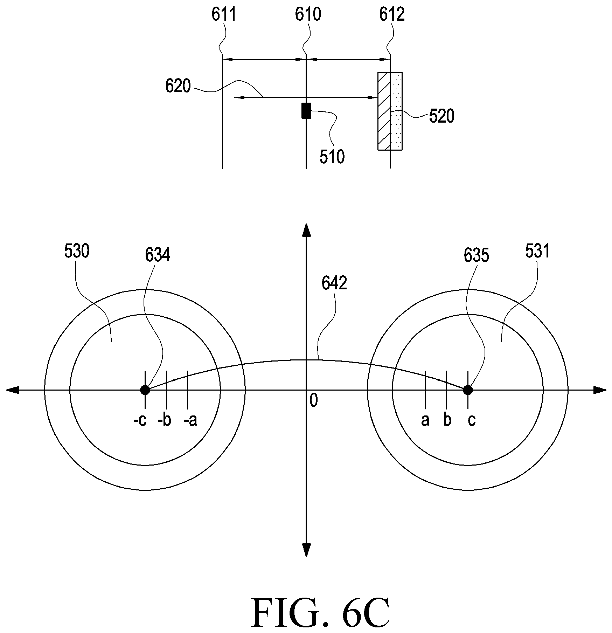

According to an embodiment, the arrangement of the plurality of displays 530 and 531 corresponding to the position of the magnet 520 is described below with reference to FIGS. 6A, 6B, and 6C.

According to an embodiment, although FIG. 5A illustrates that the hall sensor 510 is fixed and the magnet 520 moves, the magnet 520 may be fixed and the hall sensor 510 may move.

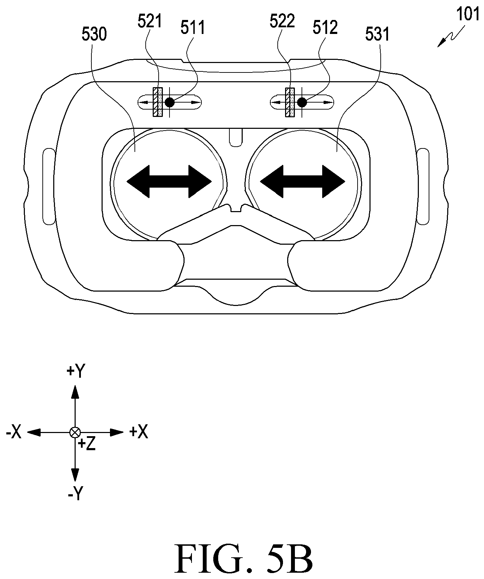

FIG. 5B is a view illustrating repositioning of a plurality of displays respectively corresponding to repositioning of a plurality of hall sensors or a plurality of magnets according to an embodiment.

Referring to FIG. 5B, a wearable electronic device 101 (e.g., the electronic device 101 of FIG. 1) may include a first hall sensor 511 (e.g., the sensor module 176 of FIG. 1), a second hall sensor 512 (e.g., the sensor module 176 of FIG. 1), a first magnet 521, a second magnet 522, and a plurality of displays 530 and 531. According to an embodiment, the position of the first magnet 521 may correspond to the position of the first display 530, and the position of the second magnet 522 may correspond to the position of the second display 531.

According to an embodiment, the first hall sensor 511 and the second hall sensor 512 may sense magnetic force data by the first magnet 521 and the second magnet 522, respectively, and may be fixed to an area of the head mounted display device 101.

According to an embodiment, the first magnet 521 and the second magnet 522 may linearly move, and the centers of the movable distances may be positioned on the same axis as the centers of the first hall sensor 511 and the second hall sensor 512, respectively. For example, the first magnet 521 and the second magnet 522 may move in the +x direction or the -x direction through a jig disposed in the x-axis direction. According to an embodiment, the y coordinates and/or z coordinates of the centers of the movable distances of the first magnet 521 and the second magnet 522 and the centers of the first hall sensor 511 and the second hall sensor 512 may be different, but the x-coordinates thereof may be substantially the same.

According to an embodiment, the first display 530 may be a display corresponding to the left eye, and the second display 531 may be a display corresponding to the right eye. According to an embodiment, the distance between the first display 530 and the second display 531 may be adjusted in the x-axis direction. According to an embodiment, the first display 530 and the second display 531 may be movable in directions substantially parallel to the moving directions of the first magnet 521 and the second magnet 522, respectively.

According to an embodiment, the distance between the first display 530 and the second display 531 may be adjusted based on the positions of the first magnet 521 and the second magnet 522. For example, the first display 530 may move toward the center or outward based on the position of the first magnet 521. According to an embodiment, the second display 531 may move toward the center or outward based on the position of the second magnet 522. According to an embodiment, the first magnet 521 and the second magnet 522 may move independently, and the first display 530 and the second display 531 may also move independently.

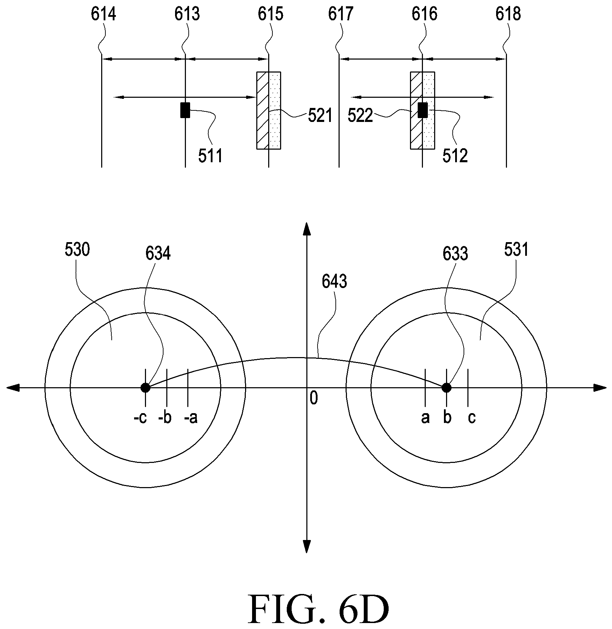

According to an embodiment, the arrangement of the first display 530 and the second display 531 corresponding to the positions of the first magnet 521 and the second magnet 522 is described below with reference to FIG. 6D.

According to an embodiment, although FIG. 5B illustrates that the first hall sensor 511 and the second hall sensor 512 are fixed and the first magnet 521 and the second magnet 522 move, the first magnet 521 and the second magnet 522 may be fixed and the first hall sensor 511 and the second hall sensor 512 may move.

FIG. 6A is a view illustrating an arrangement of a plurality of displays when a magnet is positioned at a first end of a movable distance according to an embodiment.

Referring to FIG. 6A, when the magnet 510 is positioned at a first end 611 of a movable distance in a first direction 620, a plurality of displays 530 and 531 may be disposed to have the shortest distance. According to an embodiment, the first direction 620 may be substantially parallel to the moving directions of the plurality of displays 530 and 531.

According to an embodiment, the magnet 520 may move to the first end 611 in one direction with respect to the center 610 in which the hall sensor 510 is disposed, and may move to the second end 612 in the opposite direction.

According to an embodiment, the magnet 520 may move by substantially the same distance to two opposite sides (+x direction, -x direction) of the x-axis direction with respect to the center 610 in which the hall sensor 510 is disposed. For example, the distance from the center 610 to the first end 611 and the distance from the center 610 to the second end 612 may be the same.

According to an embodiment, the plurality of displays 530 and 531 may be disposed at substantially the same distance from the center (e.g., 0) of the plurality of displays 530 and 531, respectively. According to an embodiment, the distance between the plurality of displays 530 and 531 may be defined as the distance between the center of the first display 530 and the center of the second display 531, and the smallest distance between the plurality of displays 530 and 531 may be 2a (e.g., the distance 640 between the plurality of displays in FIG. 6A), the middle distance may be 2b (e.g., the distance 641 between the plurality of displays in FIG. 6B) greater than 2a, and the largest distance may be 2c (e.g., the distance 642 between the plurality of displays in FIG. 6C) greater than 2b. For example, the smallest distance 2a may be set to about 50 mm, and the largest distance 2c may be set to about 80 mm. According to an embodiment, 2b may be set to about 63 mm, which corresponds to the inter-pupillary distance that the statistically largest number of people have.

According to an embodiment, when the magnet 520 is positioned at the first end 611 (e.g., the negative edge) of the movable distance, the distance between the plurality of displays 530 and 531 may be smallest. According to an embodiment, the center of the first display 530 may be disposed at (-a,0) 630, and the center of the second display 531 may be disposed at (a,0) 631. According to an embodiment, when the magnet 510 is positioned at the first end 611, the distance 640 between (-a,0) 630, which is the center of the first display 530, and (a,0) 631, which is the center of the second display 531, may be 2a.

According to an embodiment, when the position of the magnet 520 moves in the x-axis direction to be positioned in the center 610 in which the hall sensor 510 is disposed, the arrangement of the plurality of displays 530 and 531 is described below with reference to FIG. 6B.

FIG. 6B is a view illustrating an arrangement of a plurality of displays when a magnet is positioned in the center of a movable distance according to an embodiment.

Referring to FIG. 6B, the magnet 520 may move to the first end 611 in one direction from the center 610 in which the hall sensor 510 is disposed, and may move to the second end 612 in the opposite direction. According to an embodiment, the distance from the center 610 to the first end 611 and the distance from the center 610 to the second end 612 may be substantially the same.

According to an embodiment, when the magnet 520 is positioned in the center 610 in which the hall sensor 510 is disposed, the distance between the plurality of displays 530 and 531 may be larger than the distance in FIG. 6A. According to an embodiment, the center of the first display 530 may be disposed at (-b,0) 632, and the center of the second display 531 may be disposed at (b,0) 633. According to an embodiment, when the magnet 510 is positioned in the center 610 in which the hall sensor 510 is disposed, the distance 641 between (-b,0) 632, which is the center of the first display 530, and (b,0) 633, which is the center of the second display 531, may be 2b.

According to an embodiment, when the position of the magnet 520 moves in the x-axis direction to be positioned at the second end 612 of the distance at which the magnet is movable, the arrangement of the plurality of displays 530 and 531 is described below with reference to FIG. 6C.

FIG. 6C is a view illustrating an arrangement of a plurality of displays when a magnet is positioned at a second end of a movable distance according to an embodiment.

Referring to FIG. 6C, the magnet 520 may move to the first end 611 in one direction from the center 610 in which the hall sensor 510 is disposed, and may move to the second end 612 in the opposite direction. According to an embodiment, the distance from the center 610 to the first end 611 and the distance from the center 610 to the second end 612 may be substantially the same.

According to an embodiment, when the magnet 520 is positioned at the second end 612 (e.g., the positive edge) of the movable distance, the distance between the plurality of displays 530 and 531 may be largest. According to an embodiment, the center of the first display 530 may be disposed at (-c,0) 634, and the center of the second display 531 may be disposed at (c,0) 635. According to an embodiment, when the magnet 510 is positioned at the second end 612, the distance 642 between (-c,0) 634 which is the center of the first display 530 and (c,0) 635 which is the center of the second display 531 may be 2c.

FIGS. 6A to 6C illustrate that the distance between the plurality of displays 530 and 531 is the smallest after determining that the magnet 520 moves to the first end 611 in the -x-axis direction, and the distance between the plurality of displays 530 and 531 is the largest after determining that the magnet 520 moves to the second end 612 in the +x-axis direction. However, according to an embodiment, the distance between the plurality of displays 530 and 531 may be the largest after determining that the magnet 520 moves to the first end 611 in the -x-axis direction, and the distance between the plurality of displays 530 and 531 may be the smallest after determining that the magnet 520 moves to the second end 612 in the +x-axis direction.

FIG. 6D is a view illustrating an arrangement of a plurality of displays respectively corresponding to positions of magnets when a plurality of magnets respectively correspond to a plurality of displays according to an embodiment.

Referring to FIG. 6D, the first magnet 521 may move to the first end 614 in one direction and may move to the second end 615 in the opposite direction with respect to the center 613 in which the first hall sensor 511 is disposed. According to an embodiment, the first magnet 521 may move by substantially the same distance to two opposite sides (+x direction, -x direction) of the x-axis direction with respect to the center 613 in which the first hall sensor 511 is disposed. For example, the distance from the center 613 to the first end 614 and the distance from the center 613 to the second end 615 may be substantially the same.

According to an embodiment, when the first magnet 521 is positioned at the first end 614, the center of the first display 530 may be disposed at (-a,0) closest to the center (e.g., 0). According to an embodiment, when the first magnet 521 is positioned at the center 613 where the first hall sensor 511 is disposed, the center of the first display 530 may be disposed at (-b,0) farther than (-a,0) from the center (e.g., 0). According to an embodiment, when the first magnet 521 is positioned at the second end 615, the center of the first display 530 may be disposed at (-c,0) farther than (-b,0) from the center (e.g., 0).

According to an embodiment, the second magnet 522 may move to the first end 617 in one direction with respect to the center 616 in which the second hall sensor 512 is disposed, and may move to the second end 618 in the opposite direction. According to an embodiment, the second magnet 522 may move by substantially the same distance to two opposite sides (+x direction, -x direction) of the x-axis direction with respect to the center 616 in which the second hall sensor 512 is disposed. For example, the distance from the center 616 to the first end 617 and the distance from the center 616 to the second end 618 may be substantially the same.

According to an embodiment, when the second magnet 522 is positioned at the first end 617, the center of the second display 531 may be disposed at (a,0) closest to the center (e.g., 0). According to an embodiment, when the second magnet 522 is positioned at the center 616 where the second hall sensor 512 is disposed, the center of the second display 531 may be disposed at (b,0) farther than (a,0) from the center (e.g., 0). According to an embodiment, when the second magnet 522 is positioned at the second end 618, the center of the second display 531 may be disposed at (c,0) farther than (b,0) from the center (e.g., 0).

According to an embodiment, the first magnet 521 and the second magnet 522 may be repositioned independently, and the first display 530 and the second display 531 may also be repositioned independently.

For example, as illustrated in FIG. 6D, when the first magnet 521 is disposed at the second end 615, the center of the first display 530 may be disposed at (-c,0) 634, and when the second magnet 522 is disposed in the center 616 where the second hall sensor 512 is disposed, the center of the second display 531 may be disposed at (b,0) 633. According to an embodiment, the distance 634 between (-c,0) 634 that is the center of the first display 530 and (b,0) 633 that is the center of the second display 531 may be b+c.

As described above, as the first display and the second display may be arranged so that the distances of the first display and second display from the center differ, it is possible to provide a screen suitable for the positions of the pupils to users having different distances of the left and right eyes from the center of the face.

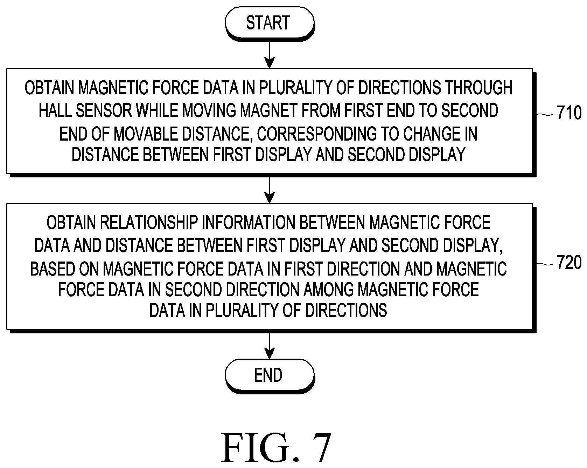

FIG. 7 is a flowchart illustrating an operation of obtaining relationship information between magnetic force data of a wearable electronic device and a plurality of displays according to an embodiment.

In the following embodiment, the operations may be sequentially performed, but may be performed non-sequentially. For example, the order of the operations may be changed, and at least two operations may be performed in parallel.

According to an embodiment, operations 710 and 720 may be understood as performed by a processor (e.g., the processor 120 of FIG. 1) of a wearable electronic device (e.g., the electronic device 101 of FIG. 1).

Referring to FIG. 7, in operation 710, the wearable electronic device (e.g., the electronic device 101 of FIG. 1 or the processor 120 of FIG. 1) obtains magnetic force data in a plurality of directions through the hall sensor (e.g., the sensor module 176 of FIG. 1) while the magnet moves from the first end to the second end of the movable distance in response to a change in the distance between the first display (e.g., the display module 160 of FIG. 1) and the second display (e.g., the display module 160 of FIG. 1).

According to an embodiment, the wearable electronic device may include a micro control unit (MCU) that processes only data of sensors as a separate component from a processor (e.g., the processor 120 of FIG. 1) (e.g., an application processor (AP)), or may include the MCU as a block in the processor.

According to an embodiment, based on the magnet (e.g., the magnet 520 of FIG. 6A) of the wearable electronic device being positioned at the first end (e.g., the first end 611 of FIG. 6A), the first display and the second display may be disposed so that the distance between the first display (e.g., the display module 160 of FIG. 1 or the first display 530 of FIG. 6A) and the second display (e.g., the display module 160 of FIG. 1 or the second display 531 of FIG. 6A) of the wearable electronic device is the smallest.

According to an embodiment, based on the magnet of the wearable electronic device being positioned at the second end (e.g., the second end 612 of FIG. 6C), the first display and the second display may be disposed so that the distance between the first display (e.g., the display module 160 of FIG. 1 or the first display 530 of FIG. 6C) and the second display (e.g., the display module 160 of FIG. 1 or the second display 531 of FIG. 6C) is the largest.

According to an embodiment, the distance between the first display and the second display may be changed to correspond to the position of the moving magnet.

According to an embodiment, as illustrated in FIGS. 6A to 6C, the magnet may move to the first end (e.g., a negative edge), the center, and the second end (e.g., the positive edge), and the hall sensor may detect magnetic force data in the plurality of directions (e.g., x-axis direction, y-axis direction, and z-axis direction) according to the position of the magnet. According to an embodiment, since the position of the magnet corresponds to the distance between the first display and the second display, the wearable electronic device may obtain magnetic force data for the distance between the first display and the second display.

According to an embodiment, the position of the magnet may be manually changed by the user, or may be automatically changed through a driver including a motor.

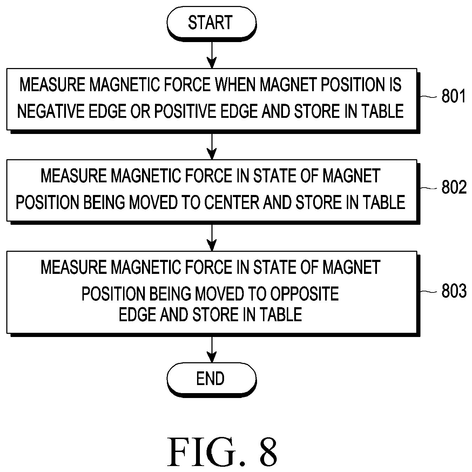

According to an embodiment, an operation of obtaining magnetic force data in a plurality of directions while moving the magnet is described below with reference to FIG. 8.

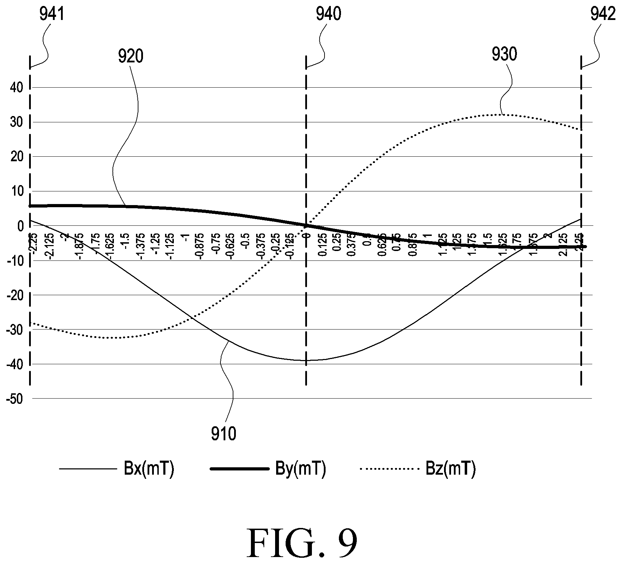

According to an embodiment, magnetic force data in a plurality of directions with respect to a distance between displays corresponding to a position of a magnet is described below with reference to FIG. 9.

According to an embodiment, in operation 720, the wearable electronic device obtains relationship information between the distance between the first display and the second display and magnetic force data based on magnetic force data in the first direction and magnetic force data in the second direction among the magnetic force data in the plurality of directions.

According to an embodiment, the wearable electronic device may obtain relationship information between the distance between the first display and the second display and the magnetic force data based on magnetic force data in a direction in which a variation is largest, of magnetic force data in the first direction and magnetic force data in the second direction. According to an embodiment, obtaining the relationship information between the magnetic force data and the distance between the first display and the second display may include mapping (or calibrating) the distance information between the first display and the second display corresponding to the magnetic force data values in the plurality of directions detected by the hall sensor.

According to an embodiment, the first direction may be an x-axis direction, and the second direction may be a z-axis direction from the inside to the outside of the HMD device. According to an embodiment, the first direction may be a direction substantially parallel to the arrangement direction and/or the moving direction of the first display and the second display.

According to an embodiment, the wearable electronic device may perform first correction on magnetic force data in the x-axis direction among the magnetic force data in the plurality of directions so that magnetic force data in the x-axis direction when the magnet is positioned in a center of the hall sensor becomes 0. For example, the core magnetic force among the magnetic force data obtained according to the movement of the magnet is the magnetic force when the magnet is positioned in the center where the hall sensor is disposed, and the wearable electronic device may identify whether the magnetic force data on the y axis and z axis are close to zero, and may identify the magnetic force data value on the x axis as an offset.

According to an embodiment, the wearable electronic device may first correct the plurality of magnetic force data by subtracting the value of the magnetic force data on the x axis obtained as the offset from the overall magnetic force data on the x axis obtained as the magnet moves.

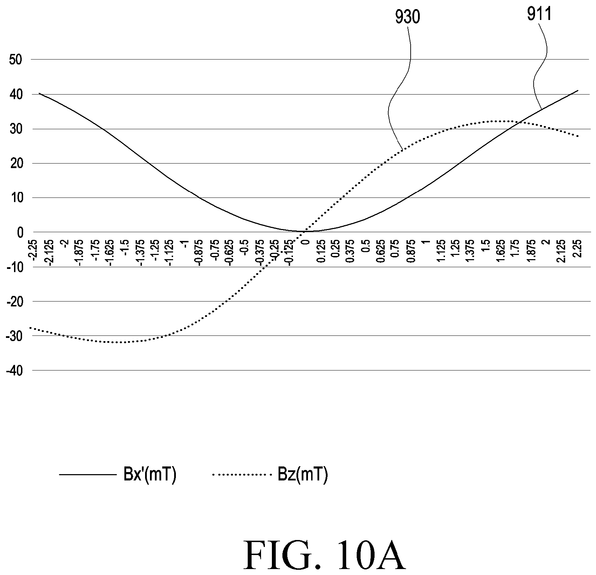

According to an embodiment, the first corrected magnetic force data obtained by subtracting the offset of the x-axis magnetic force data is described below with reference to FIG. 10A.

According to an embodiment, the wearable electronic device may perform second correction by x-axis symmetrically moving a section, in which a variation is a negative number, of the first-corrected magnetic force data in the x-axis direction. For example, when the magnet is not positioned in the center according to the x-axis magnetic force data in the form of a quadratic function, two inter-display distances correspond to one magnetic force data. Thus, the wearable electronic device may perform correction in a linear form by x-axis symmetrically moving the section in which the variation is a negative value among the first corrected magnetic force data in the x-axis direction.

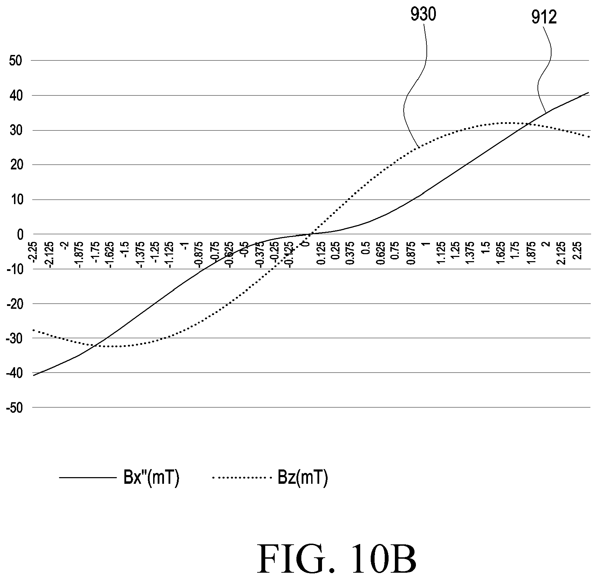

According to an embodiment, the magnetic force data where second correction for x-axis symmetrically moving the section where the variation in the first corrected x-axis magnetic force data is a negative value has been performed is described below with reference to FIG. 10B.

According to an embodiment, the wearable electronic device may compare a variation in the second-corrected magnetic force data in the x-axis direction and a variation in z-axis magnetic force data. According to an embodiment, the wearable electronic device may obtain relationship information about the distance between the first display and the second display based on the second corrected magnetic force data in the x-axis direction and the magnetic force data in a direction in which the variation is large of the z-axis magnetic force data.

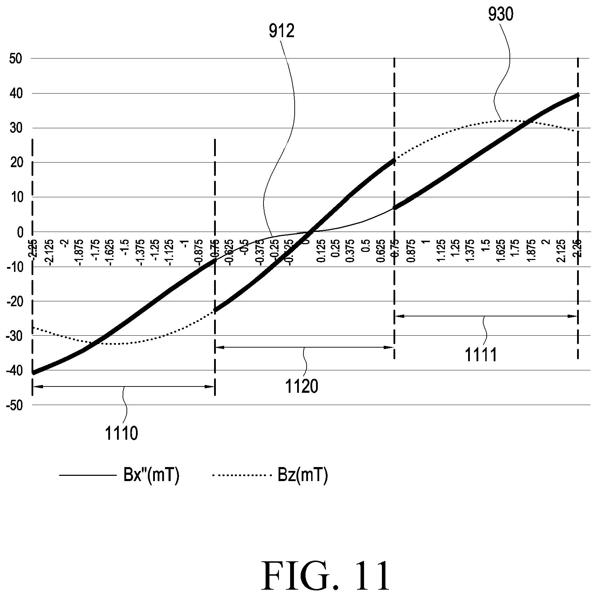

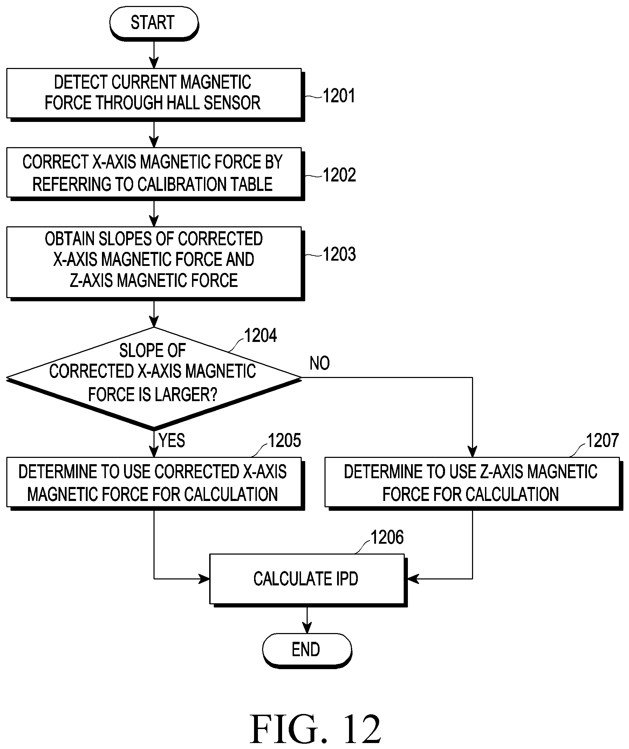

According to an embodiment, an operation of identifying the second corrected magnetic force data in the x-axis direction and the magnetic force data in a direction in which the variation is large of the z-axis magnetic force data is described below with reference to FIGS. 11 and 12.

According to an embodiment, the wearable electronic device may receive a user input for updating the relationship information between the magnetic force data and the distance between the first display and the second display. According to an embodiment, in response to the user input being received, the wearable electronic device may update relationship information between magnetic force data in a plurality of directions obtained while the magnet moves from the first end to the second end of the movable distance and the distance between the first display and the second display.

According to an embodiment, in response to receiving a user input, the wearable electronic device may display, on the first display and/or the second display, a guide user interface (UI) for updating the relationship information between magnetic force data in the plurality of directions and the distance between the first display and the second display.

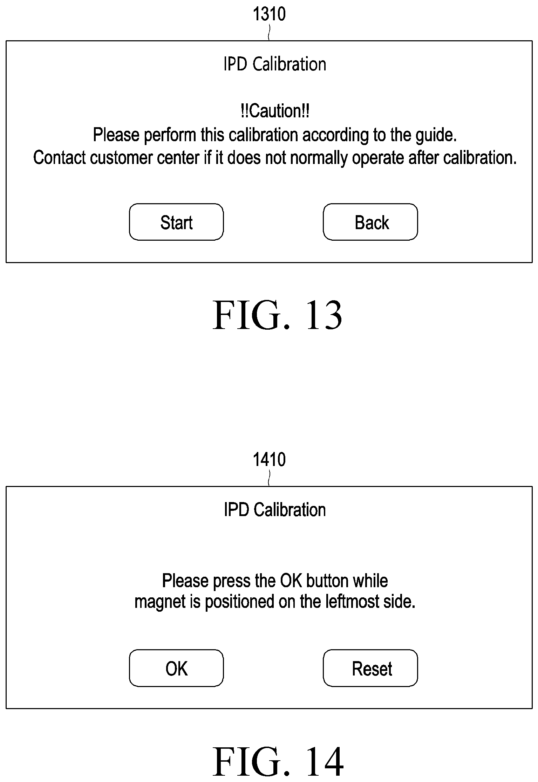

According to an embodiment, an operation of obtaining (e.g., mapping or calibration) relationship information between magnetic force data in the plurality of directions and the distance between the first display and the second display by the user input is described below with reference to FIGS. 13, 14, and 15.

According to an embodiment, the wearable electronic device may detect magnetic force data through the hall sensor in response to the distance between the first display and the second display being adjusted by a user input. According to an embodiment, the wearable electronic device may obtain the adjusted distance between the first display and the second display based on the detected magnetic force data and the obtained relationship information. According to an embodiment, the wearable electronic device may display an image on the first display and/or the second display based on the adjusted distance.

According to an embodiment, after determining that the user's inter-pupillary distance is received by a user input, the wearable electronic device may adjust the distance between the first display and the second display to obtain magnetic force data corresponding to the inter-pupillary distance based on the obtained relationship information. According to an embodiment, the wearable electronic device may display an image corresponding to the inter-pupillary distance on the first display and the second display in which the distance has been adjusted.

FIG. 8 is a flowchart illustrating an operation of obtaining magnetic force data of a wearable electronic device according to an embodiment.

In the following embodiment, the operations may be sequentially performed, but may be performed non-sequentially. For example, the order of the operations may be changed, and at least two operations may be performed in parallel.

According to an embodiment, operations 801 and 803 may be understood as performed by a processor (e.g., the processor 120 of FIG. 1) of a wearable electronic device (e.g., the electronic device 101 of FIG. 1).

Referring to FIG. 8, in operation 801, the wearable electronic device (e.g., the electronic device 101 of FIG. 1, the processor 120 of FIG. 1, or the wearable electronic device 101 of FIG. 5A) may measure a magnetic force when the position is a negative edge or a positive edge and may store the measured magnetic force in a table. According to an embodiment, as illustrated in FIG. 6A or 6C, the wearable electronic device may measure and store the magnetic force in the state in which the magnet is disposed at the first end (e.g., the first end 611 of FIG. 6A) or the second end (e.g., the second end 612 of FIG. 6C) manually by the user input or automatically by the motor.

According to an embodiment, in operation 802, the wearable electronic device may measure the magnetic force in the state in which the position of the magnet is moved to the center and store the measured magnetic force in the table. According to an embodiment, as illustrated in FIG. 6B, the wearable electronic device may measure and store the magnetic force in the state in which the magnet is disposed in the center (e.g., the center 610 of FIG. 6B) manually by the user input or automatically by the motor.

According to an embodiment, in operation 803, the wearable electronic device may measure the magnetic force when the position is the opposite edge (e.g., the positive edge or the negative edge) and may store the magnetic force in the table. According to an embodiment, as illustrated in FIG. 6A or 6C, the wearable electronic device may measure and store the magnetic force in the state in which the magnet is disposed at the second end (e.g., the second end 612 of FIG. 6C) or the first end (e.g., the first end 611 of FIG. 6A) manually by the user input or automatically by the motor.

According to an embodiment, the magnetic force data obtained through operations 801 to 803 may be as shown in Table 1 below.

**[Table 1]**

| **X-position** | **Bx(mT)** | **By(mT)** | **Bz(mT)** |
|---|---|---|---|
| Negative Edge | 1.809 | 5.858 | -28.177 |
| 0 | -38.921 | 0 | 0 |
| Positive Edge | 1.809 | -5.858 | 28.177 |

FIG. 9 is a view illustrating magnetic force data in a plurality of directions, obtained based on a hall sensor or magnet movement according to an embodiment. Referring to FIG. 9, the wearable electronic device (e.g., the electronic device 101 of FIG. 1, the processor 120 of FIG. 1, or the wearable electronic device 101 of FIG. 5A) may obtain magnetic force data in a plurality of directions (e.g., the x axis, y axis, and z axis of the wearable electronic device) based on a hall sensor movement (e.g., the magnet fixed) or a magnet movement (e.g., the hall sensor fixed). According to an embodiment, the x axis of the graph illustrated in FIG. 9 may be the position value of the magnet in which the center 940 in which the hall sensor is disposed is defined as '0', and the y axis may be the magnetic force data value.

According to an embodiment, the magnetic force data graph may include magnetic force data 910 (e.g., Bx) on the x axis, magnetic force data 920 (e.g., By) on the y axis, and magnetic force data 930 (e.g., Bz) on the z axis according to the movement of the magnet to the x axis.

According to an embodiment, the magnetic force data graph may include magnetic force data in a plurality of directions at the first end 941 and magnetic force data in a plurality of directions at the second end 942 of a movable distance of the magnet.

According to an embodiment, the magnitude of magnetic force data for each position of the magnet may vary due to the assembly tolerance, but the magnetic force tendency may be substantially the same for each axis. According to an embodiment, the y-axis magnetic force data 920 and the z-axis magnetic force data 930 detected when the magnet passes through the center 940 of the hall sensor may be close to zero. According to an embodiment, the y-axis magnetic force data 920 and the z-axis magnetic force data 930 may have overall linear magnetic force data according to the position of the magnet.

According to an embodiment, the wearable electronic device may correct the x-axis magnetic force data 910 in the form of a quadratic function to have linearity as shown in FIGS. 10A and 10B below, and then may calculate the distance between displays (or the inter-pupillary distance) based on the magnetic force data value.

FIG. 10A is a view illustrating magnetic force data corrected so that magnetic force data in an x-axis direction becomes 0 when a magnet is positioned in the center of a movable distance according to an embodiment.

Referring to FIG. 10A, the wearable electronic device (e.g., the electronic device 101 of FIG. 1, the processor 120 of FIG. 1, or the wearable electronic device 101 of FIG. 5A) may first correct magnetic force data in the x-axis direction among magnetic force data in a plurality of directions (e.g., the x axis 910, the y axis 920, and the z axis 930) illustrated in FIG. 9 so that the magnetic force data in the x-axis direction when the magnet (e.g., the magnet 520 of FIG. 5A) is positioned in the center of the hall sensor (e.g., the hall sensor 510 of FIG. 5A) becomes 0. For example, the core magnetic force among the magnetic force data obtained according to the movement of the magnet is the magnetic force when the magnet is positioned in the center where the hall sensor is disposed, and the wearable electronic device may identify whether the magnetic force data on the y axis and z axis are close to zero, and may identify the magnetic force data value on the x axis as an offset.

For example, referring to Table 1 above, the wearable electronic device may identify -38.921, which is the x-axis magnetic force data value when the magnet is positioned in the center where the hall sensor is disposed, as an offset.

According to an embodiment, the wearable electronic device may first correct the x-axis magnetic force data by subtracting the value of the magnetic force data on the x axis obtained as the offset from the overall magnetic force data on the x axis obtained as the magnet moves.

For example, the wearable electronic device may subtract -38.921, which is the offset value of the overall magnetic force data 910 on the x axis illustrated in FIG. 9, thereby obtaining the corrected x-axis magnetic force data 911 (e.g., Bx') so that the magnetic force data in the x-axis direction when the magnet is positioned in the center in which the hall sensor is disposed becomes 0. According to an embodiment, the corrected x-axis magnetic force data 911 may be obtained by moving the magnetic force data 910 in the x-axis direction illustrated in FIG. 9 in parallel upward by 38.921.

According to an embodiment, correction may not be performed on the magnetic force data 930 (e.g., Bz) in the z-axis direction, and may be the same as the magnetic force data 930 (e.g., Bz) in the z-axis direction illustrated in FIG. 9.

FIG. 10B is a view illustrating magnetic force data corrected so that a section in which a variation in magnetic force data in an x-axis direction is a negative number is moved symmetrically on the x axis according to an embodiment.

Referring to FIG. 10B, as shown in FIG. 10A, the wearable electronic device may perform second correction by x-axis symmetrically moving a section, in which a variation is a negative number, of the first-corrected magnetic force data in the x-axis direction. For example, when the magnet is not positioned in the center according to the x-axis magnetic force data in the form of a quadratic function, two magnet positions (or inter-display distances) correspond to one magnetic force data. Thus, the wearable electronic device may perform correction in a linear form in which one magnet position (or inter-display distance) is mapped to one magnetic force data by x-axis symmetrically moving the section in which the variation is a negative value among the first corrected magnetic force data in the x-axis direction.

For example, as illustrated in FIG. 10A, the wearable electronic device may identify the section in which the variation is a negative value among the first corrected magnetic force data in the x-axis direction. According to an embodiment, the wearable electronic device may identify magnetic force data in the x-axis direction on the left side of "0" of the graph, when the magnet is positioned in the center where the hall sensor is disposed, as the section in which the variation is a negative value.

According to an embodiment, the wearable electronic device may maintain the magnetic force data in the x-axis direction on the right side of '0' of the graph, and may second correct the magnetic force data in the x-axis direction by x-axis symmetrically moving the magnetic force data in the x-axis direction on the left side of '0' of the graph. According to an embodiment, in the second corrected magnetic force data 912 (e.g., Bx") in the x-axis direction, the magnetic force data value on the left side of '0' of the graph may be a negative value, and the magnetic force data value on the right side of '0' of the graph may be a positive value. According to an embodiment, the second corrected magnetic force data 912 in the x-axis direction may have linearity in which one magnetic force data is mapped to one magnet position (or inter-display distance).

According to an embodiment, correction may not be performed on the magnetic force data 930 (e.g., Bz) in the z-axis direction, and may be the same as the magnetic force data 930 (e.g., Bz) in the z-axis direction illustrated in FIGS. 9 and 10A.

FIG. 11 is a view illustrating a result of comparison in variation between the corrected magnetic force data in an x-axis direction of FIG. 10B and magnetic force data in a z-axis direction.

Referring to FIG. 11, the wearable electronic device (e.g., the electronic device 101 of FIG. 1, the processor 120 of FIG. 1, or the wearable electronic device 101 of FIG. 5A) may compare the variations (e.g., the slopes of the graph) in the second corrected magnetic force data 912 (e.g., Bx") in the x-axis direction illustrated in FIG. 10B with the magnetic force data 930 (e.g., Bz) in the z-axis direction, and may identify a section in which the variation is large for each magnetic force data.

According to an embodiment, in the sections 1110 and 1111 where the position of the magnet is far from the center where the hall sensor is disposed, the variation in the second corrected magnetic force data 912 in the x-axis direction may be large, and in the section 1120 where the position of the magnet is close to the center where the hall sensor is disposed, the variation in the magnetic force data 930 in the z-axis direction may be large.

For example, in the section 1110 in which the magnet is positioned at a distance of about 0.75 (e.g., about -0.75) to about 2.25 (e.g., about -2.25) to the left from the center (e.g., '0') in which the hall sensor is disposed, the variation in the second corrected magnetic force data 912 in the x-axis direction is larger than the variation in the magnetic force data 930 in the z-axis direction, so that the distance between displays may be obtained using the second corrected magnetic force data 912 in the x-axis direction. According to an embodiment, in the section 1111 in which the magnet is positioned at a distance of about 0.75 (e.g., about 0.75) to about 2.25 (e.g., about 2.25) to the right from the center (e.g., '0') in which the hall sensor is disposed, the variation in the second corrected magnetic force data 912 in the x-axis direction is larger than the variation in the magnetic force data 930 in the z-axis direction, so that the distance between displays may be obtained using the second corrected magnetic force data 912 in the x-axis direction.

According to an embodiment, in the section 1120 in which the magnet is positioned at a distance of about 0.75 (e.g., about -0.75) to the left to about 0.75 (e.g., about 0.75) to the right from the center (e.g., '0') in which the hall sensor is disposed, the variation in the magnetic force data 930 in the z-axis direction is larger than the variation in the second corrected magnetic force data 912 in the x-axis direction, so that the distance between displays may be obtained using the magnetic force data 930 in the z-axis direction.

As described above, as the hall sensor approaches the center (e.g., "0") in which the hall sensor is disposed, the variation in the magnetic force data 912 in the x-axis direction may decrease, and thus the error in calculation may increase. However, in the section close to the center (e.g., "0") in which the hall sensor is disposed, the error in calculation may be reduced using the magnetic force data 930 in the z-axis direction instead of the magnetic force data 912 in the x-axis direction.

FIG. 12 is a flowchart illustrating an operation of calculating a distance between a plurality of displays based on magnetic force data in a direction in which a variation is large in a wearable electronic device according to an embodiment.

In the following embodiment, the operations may be sequentially performed, but may be performed non-sequentially. For example, the order of the operations may be changed, and at least two operations may be performed in parallel.

According to an embodiment, operations 1201 and 1207 may be understood as performed by a processor (e.g., the processor 120 of FIG. 1) of a wearable electronic device (e.g., the electronic device 101 of FIG. 1).

Referring to FIG. 12, in operation 1201, the wearable electronic device (e.g., the electronic device 101 of FIG. 1, the processor 120 of FIG. 1, or the wearable electronic device 101 of FIG. 5A) may detect a current magnetic force by a hall sensor (e.g., the sensor module 176 of FIG. 1, or the hall sensor 510 of FIG. 5A). For example, the wearable electronic device may obtain magnetic force data through the hall sensor while moving the position of the magnet (e.g., the magnet 520 of FIG. 5A) from the first end of the movable distance to the second end opposite thereto. According to an embodiment, the operation of detecting the current magnetic force is substantially the same as the operation of the wearable electronic device illustrated in FIG. 8, and thus a duplicate description thereof will be omitted.

According to an embodiment, in operation 1202, the wearable electronic device may modify the x-axis magnetic force by referring to the calibration table. For example, the wearable electronic device may store magnetic force data in a plurality of directions measured according to the movement of the magnet in a calibration table, and may first correct the magnetic force data in the x-axis direction so that the value of the magnetic force data in the x-axis direction when the magnet is positioned in the center in which the hall sensor is disposed becomes 0 based on the magnetic force data in the x-axis direction.

According to an embodiment, the wearable electronic device may perform second correction by x-axis symmetrically moving a section, in which a variation is a negative number, of the first-corrected magnetic force data in the x-axis direction.

According to an embodiment, in operation 1203, the wearable electronic device may obtain the slopes (e.g., the variation in magnetic force data) of the corrected x-axis magnetic force data and the z-axis magnetic force data.

According to an embodiment, in operation 1204, the wearable electronic device may identify whether the slope of the corrected x-axis magnetic force data is larger. For example, the wearable electronic device may compare the variation in the corrected x-axis magnetic force data corresponding to the position of the magnet with the variation in the z-axis magnetic force data to determine whether the slope of the corrected x-axis magnetic force data is larger.

According to an embodiment, after determining that the slope of the corrected x-axis magnetic force data is larger (yes in operation 1204), in operation 1205, the wearable electronic device may determine to use the corrected x-axis magnetic force data for calculation. For example, after determining that the position of the magnet is positioned at a distance larger than a set distance from the center in which the hall sensor is disposed, the wearable electronic device may determine to use the corrected x-axis magnetic force data for calculation. According to an embodiment, the set distance may be a point where magnetic force data having a larger slope of the corrected x-axis magnetic force data and the z-axis magnetic force data is changed.

According to an embodiment, in operation 1206, the wearable electronic device may calculate an IPD value (inter-pupil distance) (or inter-display distance) using the corrected x-axis magnetic force data. For example, the wearable electronic device may calculate the IPD value based on a table in which per-IPD corrected x-axis magnetic force data are mapped. According to an embodiment, the wearable electronic device may calculate the IPD value through linear regression using the corrected x-axis magnetic force data.

According to an embodiment, after determining that the slope of the corrected x-axis magnetic force data is smaller (no in operation 1204), in an optional operation 1207, the wearable electronic device may determine to use the z-axis magnetic force data for calculation. For example, after determining that the position of the magnet is positioned at a distance smaller than a set distance from the center in which the hall sensor is disposed, the wearable electronic device may determine to use the z-axis magnetic force data for calculation. According to an embodiment, the set distance may be a point where magnetic force data having a larger slope of the corrected x-axis magnetic force data and the z-axis magnetic force data is changed.

According to an embodiment, in operation 1206, the wearable electronic device may calculate an IPD value (inter-pupil distance) (or inter-display distance) using the z-axis magnetic force data. For example, the wearable electronic device may calculate the IPD value based on a table in which per-IPD z-axis magnetic force data are mapped. According to an embodiment, the wearable electronic device may calculate the IPD value through linear regression using the z-axis magnetic force data.

As described above, when the change in magnetic force data according to the moving distance is small, there is a possibility that the change is due to the magnetic force noise rather than the movement of the magnet. Therefore, the methods all may be used for the corrected X-axis magnetic force data and the Z-axis magnetic force data while the axis with the larger slope is selected and used, thereby further increasing the accuracy of the relationship between the IPD (or inter-display distance) and the magnetic force data value.

FIG. 13 is a view illustrating a user interface (UI) provided based on a user input for updating relationship information between a plurality of displays and magnetic force data of a wearable electronic device according to an embodiment.

Referring to FIG. 13, the wearable electronic device (e.g., the electronic device 101 of FIG. 1, the processor 120 of FIG. 1, or the wearable electronic device 101 of FIG. 5A) may update relationship information the distance between the first display and the second display and magnetic force data in a plurality of directions obtained while moving the magnet from the first end to second end of the movable distance of the magnet in response to receiving a user input for updating the relationship information between the distance between the first display and the second display and the magnetic force data.

For example, when a gap occurs while the wearable electronic device is used, is left at a high temperature for a long time, or the magnetic force graph detected by the hall sensor according to the position of the magnet is changed due to a phenomenon in which the magnetic force is reduced, the currently set IPD value (or inter-display distance) may be incorrectly calculated. According to an embodiment, as the user may feel unnatural from a screen provided based on the incorrectly calculated IPD value, a user input for updating (calibration or in-use calibration) the relationship information between the distance between the first display and the second display and the magnetic force data in a plurality of directions may be received.

According to an embodiment, in response to receiving a user input, the wearable electronic device may display, on the first display and/or the second display, a guide user interface (UI) for updating the relationship information between magnetic force data in the plurality of directions and the distance between the first display and the second display.

According to an embodiment, the wearable electronic device may display a UI 1310 indicating that update (calibration or in-use calibration) of the relationship information between the magnetic force data in the plurality of directions and the distance between the first display and the second display is to be performed, and may receive an identification of whether to perform the update.

According to an embodiment, when a user input for starting to perform an update is received, a guide UI for calibration may be displayed as shown in FIG. 14.

FIG. 14 is a view illustrating a user interface (UI) provided based on a user input for updating relationship information between a plurality of displays and magnetic force data of a wearable electronic device according to an embodiment.

Referring to FIG. 14, the wearable electronic device (e.g., the electronic device 101 of FIG. 1, the processor 120 of FIG. 1, or the wearable electronic device 101 of FIG. 5A) may display a guide UI 1410 including a message for leading the magnet to be positioned at one end (negative edge or positive edge) of the movable distance. For example, the guide UI 1410 may include a message such as 'Please press the OK button while the magnet is positioned on the leftmost side'. According to an embodiment, the left side may be a negative edge, and the distance between displays may be adjusted to be the smallest.

According to an embodiment, after determining that the 'OK' button is selected, the wearable electronic device may obtain magnetic force data, map the obtained magnetic force data to the negative edge (and/or the smallest inter-display distance) and store the same.

According to an embodiment, after measuring the magnetic force data, the wearable electronic device may lead the magnet to move sequentially to the center and the positive edge, and may obtain the magnetic force data in the center and the magnetic force data at the positive edge.

According to an embodiment, the guide UI 1410 may further include a button for resetting calibration considering a failure in correctly performing calibration due to the magnet being placed at a different position intentionally or mistakenly by the user.

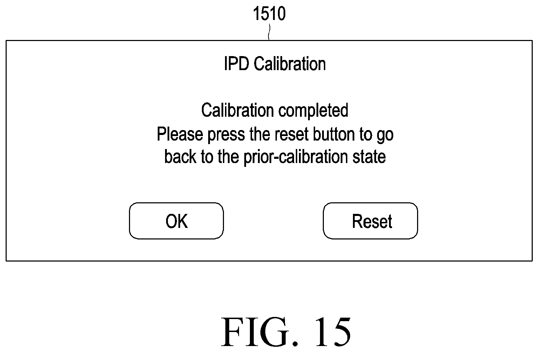

FIG. 15 is a view illustrating a user interface (UI) provided based on a user input for updating relationship information between a plurality of displays and magnetic force data of a wearable electronic device according to an embodiment.

Referring to FIG. 15, the wearable electronic device (e.g., the electronic device 101 of FIG. 1, the processor 120 of FIG. 1, or the wearable electronic device 101 of FIG. 5A) may display a UI 1510 indicating completion after determining that updating (or calibration) relationship information between magnetic force data and distances between a plurality of displays is completed.

According to an embodiment, as the user feels unnatural or uncomfortable even after calibration is completed, the UI 1510 indicating the completion may further include a button for resetting calibration considering the occasion where the user desires to return the state to the prior-calibration state.

As described above, it is possible to provide a screen corresponding to the inter-display distance and provide more comfortable field of view and clear images to the user by measuring the magnetic force data of the magnet at the position corresponding to the set inter-display distance.

According to an embodiment, a wearable electronic device may comprise a hall sensor, a magnet, a first display, a second display disposed side by side, for example from left to right, with the first display, and at least one processor operatively connected to the hall sensor, the first display, and the second display.

According to an embodiment, the magnet linearly may move in a first direction parallel to a direction in which the first display and the second display are disposed, by the same distance to the left and right with respect to the hall sensor, corresponding to a distance between the first display and the second display.

According to an embodiment, the at least one processor may obtain magnetic force data in a plurality of directions through the hall sensor while the magnet moves from a first end to a second end of a movable distance in response to a change in the distance between the first display and the second display.

According to an embodiment, the at least one processor may obtain relationship information between the distance between the first display and the second display and magnetic force data based on magnetic force data in the first direction and magnetic force data in the second direction among the magnetic force data in the plurality of directions.

According to an embodiment, based on the magnet being positioned at the first end, the first display and the second display may be disposed so that the distance between the first display and the second display is shortest.

According to an embodiment, based on the magnet being positioned at the second end, the first display and the second display may be disposed so that the distance between the first display and the second display is longest.

According to an embodiment, the distance between the first display and the second display may be changed to correspond to a position of the moving magnet.

According to an embodiment, the at least one processor may obtain relationship information between the distance between the first display and the second display and the magnetic force data based on magnetic force data in a direction in which a variation is largest, of magnetic force data in the first direction and magnetic force data in the second direction.

According to an embodiment, the first direction may be an x-axis direction, and the second direction may be a z-axis direction from an inside of the wearable electronic device to an outside of the wearable electronic device.

According to an embodiment, the at least one processor may perform first correction on magnetic force data in the x-axis direction among the magnetic force data in the plurality of directions so that magnetic force data in the x-axis direction when the magnet is positioned in a center of the hall sensor becomes 0.

According to an embodiment, the at least one processor may perform second correction by x-axis symmetrically moving a section, in which a variation is a negative number, of the first-corrected magnetic force data in the x-axis direction.

According to an embodiment, the at least one processor may compare a variation in the second-corrected magnetic force data in the x-axis direction and a variation in z-axis magnetic force data.

According to an embodiment, the at least one processor may obtain relationship information about the distance between the first display and the second display based on magnetic force data in a direction in which a variation is large.

According to an embodiment, the at least one processor may update the relationship information between the distance between the first display and the second display and the magnetic force data in the plurality of directions obtained while the magnet moves from a first end to a second end of a movable distance in response to receiving a user input for updating the relationship information between the distance between the first display and the second display and the magnetic force data.

According to an embodiment, the at least one processor may display a guide user interface (UI) for updating the relationship information on the first display and/or the second display in response to receiving the user input.

According to an embodiment, the at least one processor may detect magnetic force data through the hall sensor in response to the distance between the first display and the second display being adjusted by a user input.

According to an embodiment, the at least one processor may obtain the adjusted distance between the first display and the second display based on the detected magnetic force data and the obtained relationship information.

According to an embodiment, the at least one processor may display an image on the first display and/or the second display based on the adjusted distance.

According to an embodiment, a method for controlling a wearable electronic device including a first display and a second display disposed side by side, for example from left to right, with the first display may comprise obtaining magnetic force data in a plurality of directions through a hall sensor of the wearable electronic device while a magnet of the wearable electronic device moves from a first end to a second end of a movable distance in response to a change in the distance between the first display and the second display.

According to an embodiment, the method for controlling the wearable electronic device may comprise obtaining relationship information between the distance between the first display and the second display and magnetic force data based on magnetic force data in the first direction and magnetic force data in the second direction among the magnetic force data in the plurality of directions.

According to an embodiment, based on the magnet being positioned at the first end, the first display and the second display may be disposed so that the distance between the first display and the second display is shortest.

According to an embodiment, based on the magnet being positioned at the second end, the first display and the second display may be disposed so that the distance between the first display and the second display is longest.

According to an embodiment, the distance between the first display and the second display may be changed to correspond to a position of the moving magnet.

According to an embodiment, obtaining the relationship information between the magnetic force data and the distance between the first display and the second display may obtain relationship information between the distance between the first display and the second display and the magnetic force data based on magnetic force data in a direction in which a variation is largest, of magnetic force data in the first direction and magnetic force data in the second direction.

According to an embodiment, the first direction may be an x-axis direction, and the second direction may be a z-axis direction from an inside of the wearable electronic device to an outside of the wearable electronic device.

According to an embodiment, the method for controlling the wearable electronic device may further comprise performing first correction on magnetic force data in the x-axis direction among the magnetic force data in the plurality of directions so that magnetic force data in the x-axis direction when the magnet is positioned in a center of the hall sensor becomes 0.

According to an embodiment, the method for controlling the wearable electronic device may further comprise performing second correction by x-axis symmetrically moving a section, in which a variation is a negative number, of the first-corrected magnetic force data in the x-axis direction.

According to an embodiment, obtaining the relationship information between the magnetic force data and the distance between the first display and the second display may compare a variation in the second-corrected magnetic force data in the x-axis direction and a variation in z-axis magnetic force data.

According to an embodiment, obtaining the relationship information between the magnetic force data and the distance between the first display and the second display may obtain relationship information about the distance between the first display and the second display based on magnetic force data in a direction in which a variation is large.

According to an embodiment, the method for controlling the wearable electronic device may further comprise updating the relationship information between the distance between the first display and the second display and the magnetic force data in the plurality of directions obtained while the magnet moves from a first end to a second end of a movable distance in response to receiving a user input for updating the relationship information between the distance between the first display and the second display and the magnetic force data.

According to an embodiment, the method for controlling the wearable electronic device may further comprise displaying a guide user interface (UI) for updating the relationship information on the first display and/or the second display in response to receiving the user input.

According to an embodiment, the method for controlling the wearable electronic device may further comprise detecting magnetic force data through the hall sensor in response to the distance between the first display and the second display being adjusted by a user input.

According to an embodiment, the method for controlling the wearable electronic device may further comprise obtaining the adjusted distance between the first display and the second display based on the detected magnetic force data and the obtained relationship information.

According to an embodiment, the method for controlling the wearable electronic device may further comprise displaying an image on the first display and/or the second display based on the adjusted distance.

According to an embodiment, in a non-transitory computer-readable recording medium storing one or more programs, the magnet linearly may move in a first direction parallel to a direction in which the first display and the second display are disposed, by the same distance to the left and right with respect to the hall sensor, corresponding to a distance between the first display and the second display.

According to an embodiment a computer program product comprises instructions which, when the program is executed by a computer, cause the computer to carry out the steps of any one of the methods defined in any of the embodiments described herein.

According to an embodiment, the one or more programs may include instructions that enable the wearable electronic device to obtain magnetic force data in a plurality of directions through the hall sensor while the magnet moves from a first end to a second end of a movable distance in response to a change in the distance between the first display and the second display.

According to an embodiment, the one or more programs may include instructions that enable the wearable electronic device to obtain relationship information between the distance between the first display and the second display and magnetic force data based on magnetic force data in the first direction and magnetic force data in the second direction among the magnetic force data in the plurality of directions.

According to an embodiment, based on the magnet being positioned at the first end, the first display and the second display may be disposed so that the distance between the first display and the second display is shortest.

According to an embodiment, based on the magnet being positioned at the second end, the first display and the second display may be disposed so that the distance between the first display and the second display is longest.

According to an embodiment, the distance between the first display and the second display may be changed to correspond to a position of the moving magnet.

According to an embodiment, the one or more programs may include instructions that enable the wearable electronic device to obtain relationship information between the distance between the first display and the second display and the magnetic force data based on magnetic force data in a direction in which a variation is largest, of magnetic force data in the first direction and magnetic force data in the second direction.

According to an embodiment, the first direction may be an x-axis direction, and the second direction may be a z-axis direction from an inside of the wearable electronic device to an outside of the wearable electronic device.

According to an embodiment, the one or more programs may include instructions that enable the wearable electronic device to perform first correction on magnetic force data in the x-axis direction among the magnetic force data in the plurality of directions so that magnetic force data in the x-axis direction when the magnet is positioned in a center of the hall sensor becomes 0.

According to an embodiment, the one or more programs may include instructions that enable the wearable electronic device to perform second correction by x-axis symmetrically moving a section, in which a variation is a negative number, of the first-corrected magnetic force data in the x-axis direction.

According to an embodiment, the one or more programs may include instructions that enable the wearable electronic device to compare a variation in the second-corrected magnetic force data in the x-axis direction and a variation in z-axis magnetic force data.

According to an embodiment, the one or more programs may include instructions that enable the wearable electronic device to obtain relationship information about the distance between the first display and the second display based on magnetic force data in a direction in which a variation is large.

According to an embodiment, the one or more programs may include instructions that enable the wearable electronic device to update the relationship information between the distance between the first display and the second display and the magnetic force data in the plurality of directions obtained while the magnet moves from a first end to a second end of a movable distance in response to receiving a user input for updating the relationship information between the distance between the first display and the second display and the magnetic force data.

According to an embodiment, the one or more programs may include instructions that enable the wearable electronic device to display a guide user interface (UI) for updating the relationship information on the first display and/or the second display in response to receiving the user input.

According to an embodiment, the one or more programs may include instructions that enable the wearable electronic device to detect magnetic force data through the hall sensor in response to the distance between the first display and the second display being adjusted by a user input.

According to an embodiment, the one or more programs may include instructions that enable the wearable electronic device to obtain the adjusted distance between the first display and the second display based on the detected magnetic force data and the obtained relationship information.

According to an embodiment, the one or more programs may include instructions that enable the wearable electronic device to display an image on the first display and/or the second display based on the adjusted distance.

The electronic device according to an embodiment may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

An embodiment of the disclosure may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities. Some of the plurality of entities may be separately disposed in different components. According to an embodiment, one or more of the above-described components may be omitted, or one or more other components may be added. Alternatively or Further, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A wearable electronic device (101), comprising:
a hall sensor;
a magnet (520);
a first display (530);
a second display (531) disposed side by side with the first display (530);
at least one processor (120); and
a memory (130) storing instructions;
wherein the magnet (520) is configured to be movable in a first direction (620) parallel to a direction in which the first display (530) and the second display (531) are disposed, within a specified range with respect to the hall sensor, wherein the first display (530) and the second display (531) are interlocked with the magnet (520) such that the position of the magnet (520) and the distance between the first display (530) and the second display (531) are interdependent,
wherein the instructions are configured to, when executed by the at least one processor (120), cause the wearable electronic device (101) to:
obtain (710) magnetic force data (910, 911, 912) in a plurality of directions through the hall sensor while the magnet (520) moves from a first end (611, 614, 617) to a second end (612, 615, 618) of the specified range; and
obtain (720) relationship information between magnetic force data (910, 911, 912, 920, 930) in the plurality of directions and a distance (640, 641, 642) between the first display (530) and the second display (531), based on magnetic force data (910, 911, 912) in the first direction (620) and magnetic force data (920, 930) in a second direction among the magnetic force data (910, 911, 912, 920, 930) in the plurality of directions.

2. The wearable electronic device (101) of claim 1, wherein based on the magnet (520) being positioned at the first end (611, 614, 617), the first display (530) and the second display (531) are disposed so that the distance (640, 641, 642) between the first display (530) and the second display (531) is the shortest,
wherein based on the magnet (520) being positioned at the second end (612, 615, 618), the first display (530) and the second display (531) are disposed so that the distance (640, 641, 642) between the first display (530) and the second display (531) is the longest, and
wherein the position of the magnet is changed by a motor.

3. The wearable electronic device (101) of claim 1 or 2, wherein the instructions are configured to, when executed by the at least one processor (120), cause the wearable electronic device (101) to obtain the relationship information between the magnetic force data (910, 911, 912, 920, 930) in the plurality of directions and the distance (640, 641, 642) between the first display (530) and the second display (531), based on magnetic force data (910, 911, 912) in a direction in which a variation of magnetic force data (910, 911, 912) is larger among the magnetic force data (910, 911, 912) in the first direction (620) and the magnetic force data (910, 911, 912) in the second direction.

4. The wearable electronic device (101) of any one of claims 1 to 3, wherein the first direction (620) is an x-axis direction, and the second direction is a z-axis direction from an inside of the wearable electronic device (101) to an outside of the wearable electronic device (101).

5. The wearable electronic device (101) of claim 4, wherein the instructions are configured to, when executed by the at least one processor (120), cause the wearable electronic device (101) to perform a first correction on magnetic force data (910, 911, 912) in the x-axis direction among the magnetic force data (910, 911, 912, 920, 930) in the plurality of directions so that the magnetic force data (910, 911, 912) in the x-axis direction becomes 0 when the magnet (520) is positioned in a center (610, 613, 616, 940) of the hall sensor.

6. The wearable electronic device (101) of claim 5, wherein the instructions are configured to, when executed by the at least one processor (120), cause the wearable electronic device (101) to perform a second correction by, with respect to x-axis, symmetrically moving a section (1110, 1111, 1120), in which a variation of the magnetic force data (910, 911, 912) is a negative number, of the first-corrected magnetic force data (910, 911, 912) in the x-axis direction.

7. The wearable electronic device (101) of claim 6, wherein the instructions are configured to, when executed by the at least one processor (120), cause the wearable electronic device (101) to:
compare a variation in the second-corrected magnetic force data (910, 911, 912) in the x-axis direction and a variation in magnetic force data (910, 911, 912) in the z-axis direction; and
obtain the relationship information of the distance (640, 641, 642) between the first display (530) and the second display (531), based on magnetic force data (910, 911, 912) in a direction in which a variation of magnetic force data (910, 911, 912) is larger, among the second-corrected magnetic force data (910, 911, 912) in the x-axis direction and the magnetic force data (910, 911, 912) in the z-axis direction.

8. The wearable electronic device (101) of any one of claims 1 to 7, wherein the instructions are configured to, when executed by the at least one processor (120), cause the wearable electronic device (101) to use the magnetic force data (910, 911, 912, 920, 930) in the plurality of directions for updating the relationship, obtained while the magnet (520) moves from the first end (611, 614, 617) to the second end (612, 615, 618) of the specified range, in response to receiving a user input for updating the relationship information between magnetic force data (910, 911, 912, 920, 930) in the plurality of directions and the distance (640, 641, 642) between the first display (530) and the second display (531).

9. The wearable electronic device of any one of claims 1 to 8, wherein the instructions are configured to, when executed by the at least one processor (120), cause the wearable electronic device (101) to display (321, 530, 531) a guide user interface (177), UI, (1310, 1510) for updating the relationship information on the first display (530) and/or the second display (531) in response to receiving the user input.

10. The wearable electronic device (101) of any one of claims 1 to 9, wherein the instructions are configured to, when executed by the at least one processor (120), cause the wearable electronic device (101) to:
detect magnetic force data (910, 911, 912) through the hall sensor in response to the distance (640, 641, 642) between the first display (530) and the second display (531) being adjusted by a user input;
obtain the adjusted distance (640, 641, 642) between the first display (530) and the second display (531) based on the detected magnetic force data (910, 911, 912) and the obtained relationship information; and
display (321, 530, 531) an image on the first display (530) and/or the second display (531) based on the adjusted distance (640, 641, 642).

11. A method for controlling a wearable electronic device (101) comprising:
a hall sensor;
a magnet (520);
a first display (530);
a second display (531) disposed side by side with the first display (530);
at least one processor (120); and
a memory (130) storing instructions;
wherein the magnet (520) is configured to be movable in a first direction (620) parallel to a direction in which the first display (530) and the second display (531) are disposed, within a specified range with respect to the hall sensor, wherein the first display (530) and the second display (531) are interlocked with the magnet (520) such that the position of the magnet (520) and the distance between the first display (530) and the second display (531) are interdependent,
wherein the method comprises:
obtaining (710), while a magnet (520) of the wearable electronic device (101) moves from a first end (611, 614, 617) to a second end (612, 615, 618) of a specified range with respect to a hall sensor of the wearable electronic device (101), magnetic force data (910, 911, 912) in a plurality of directions through the hall sensor; and
obtaining (720) relationship information between magnetic force data (910, 911, 912, 920, 930) in the plurality of directions and the distance (640, 641, 642) between the first display (530) and the second display (531), based on magnetic force data (910, 911, 912) in the first direction (620) and magnetic force data (920, 930) in a second direction among the magnetic force data (910, 911, 912, 920, 930) in the plurality of directions.

12. The method of claim 11, wherein based on the magnet (520) being positioned at the first end (611, 614, 617), the first display (530) and the second display (531) are disposed so that the distance (640, 641, 642) between the first display (530) and the second display (531) is the shortest,
wherein based on the magnet (520) being positioned at the second end (612, 615, 618), the first display (530) and the second display (531) are disposed so that the distance (640, 641, 642) between the first display (530) and the second display (531) is the longest, and
wherein the position of the magnet is changed by a motor.

13. The method of claim 11 or 12, wherein obtaining the relationship information between the magnetic force data (910, 911, 912) and the distance (640, 641, 642) between the first display (530) and the second display (531) includes obtaining the relationship information between the magnetic force data (910, 911, 912, 920, 930) in the plurality of directions and the distance (640, 641, 642) between the first display (530) and the second display (531), based on magnetic force data (910, 911, 912) in a direction in which a variation of magnetic force data (910, 911, 912) is larger among the magnetic force data (910, 911, 912) in the first direction (620) and the magnetic force data (910, 911, 912) in the second direction.

14. The method of any one of claims 11 to 13, wherein the first direction (620) is an x-axis direction, and the second direction is a z-axis direction from an inside of the wearable electronic device (101) to an outside of the wearable electronic device (101).

15. The method of claim 14, further comprising performing first correction on magnetic force data (910, 911, 912) in the x-axis direction among the magnetic force data (910, 911, 912, 920, 930) in the plurality of directions so that the magnetic force data (910, 911, 912) in the x-axis direction becomes 0 when the magnet (520) is positioned in a center (610, 613, 616, 940) of the hall sensor.

## Patentansprüche

1. Tragbares elektronisches Gerät (101), umfassend:
einen Hall-Sensor;
einen Magneten (520);
eine erste Anzeige (530);
eine zweite Anzeige (531), die neben der ersten Anzeige (530) angeordnet ist;
mindestens einen Prozessor (120); und
einen Speicher (130), in dem Befehle gespeichert sind;
wobei der Magnet (520) so konfiguriert ist, dass er in einer ersten Richtung (620) parallel zu einer Richtung, in der die erste Anzeige (530) und die zweite Anzeige (531) angeordnet sind, innerhalb eines vorgegeben Bereichs in Bezug auf den Hall-Sensor beweglich ist, wobei die erste Anzeige (530) und die zweite Anzeige (531) mit dem Magneten (520) derart verriegelt sind, dass die Position des Magneten (520) und der Abstand zwischen der ersten Anzeige (530) und der zweiten Anzeige (531) voneinander abhängig sind,
wobei die Befehle so konfiguriert sind, dass sie, wenn sie von dem mindestens einen Prozessor (120) ausgeführt werden, das tragbare elektronische Gerät (101) dazu veranlassen:
Magnetkraftdaten (910, 911, 912) in mehreren Richtungen durch den Hall-Sensor zu erhalten (710), während sich der Magnet (520) von einem ersten Ende (611, 614, 617) zu einem zweiten Ende (612, 615, 618) des vorgegeben Bereichs bewegt; und
Beziehungsinformationen zwischen Magnetkraftdaten (910, 911, 912, 920, 930) in den mehreren Richtungen und einem Abstand (640, 641, 642) zwischen der ersten Anzeige (530) und der zweiten Anzeige (531) auf der Grundlage von Magnetkraftdaten (910, 911, 912) in der ersten Richtung (620) und Magnetkraftdaten (920, 930) in einer zweiten Richtung unter den Magnetkraftdaten (910, 911, 912, 920, 930) in den mehreren Richtungen zu erhalten (720).

2. Tragbares elektronisches Gerät (101) nach Anspruch 1, wobei aufgrund der Positionierung des Magneten (520) am ersten Ende (611, 614, 617) die erste Anzeige (530) und die zweite Anzeige (531) so angeordnet sind, dass der Abstand (640, 641, 642) zwischen der ersten Anzeige (530) und der zweiten Anzeige (531) am kürzesten ist,
wobei aufgrund der Positionierung des Magneten (520) am zweiten Ende (612, 615, 618) die erste Anzeige (530) und die zweite Anzeige (531) so angeordnet sind, dass der Abstand (640, 641, 642) zwischen der ersten Anzeige (530) und der zweiten Anzeige (531) am größten ist, und
wobei die Position des Magneten durch einen Motor verändert wird.

3. Tragbares elektronisches Gerät (101) nach Anspruch 1 oder 2, wobei die Befehle so konfiguriert sind, dass sie, wenn sie von dem mindestens einen Prozessor (120) ausgeführt werden, das tragbare elektronische Gerät (101) dazu veranlassen, die Beziehungsinformationen zwischen den Magnetkraftdaten (910, 911, 912, 920, 930) in den mehreren Richtungen und dem Abstand (640, 641, 642) zwischen der ersten Anzeige (530) und der zweiten Anzeige (531) zu erhalten, basierend auf Magnetkraftdaten (910, 911, 912) in einer Richtung, in der eine Variation der Magnetkraftdaten (910, 911, 912) unter den Magnetkraftdaten (910, 911, 912) in der ersten Richtung (620) und den Magnetkraftdaten (910, 911, 912) in der zweiten Richtung größer ist.

4. Tragbares elektronisches Gerät (101) nach einem der Ansprüche 1 bis 3, wobei die erste Richtung (620) eine x-Achsenrichtung und die zweite Richtung eine z-Achsenrichtung von einer Innenseite des tragbaren elektronischen Geräts (101) zu einer Außenseite des tragbaren elektronischen Geräts (101) ist.

5. Tragbares elektronisches Gerät (101) nach Anspruch 4, wobei die Befehle so konfiguriert sind, dass sie, wenn sie von dem mindestens einen Prozessor (120) ausgeführt werden, das tragbare elektronische Gerät (101) dazu veranlassen, eine erste Korrektur an den Magnetkraftdaten (910, 911, 912) in der x-Achsenrichtung unter den Magnetkraftdaten (910, 911, 912, 920, 930) in mehreren Richtungen durchzuführen, so dass die Magnetkraftdaten (910, 911, 912) in der x-Achsenrichtung 0 werden, wenn der Magnet (520) in einer Mitte (610, 613, 616, 940) des Hall-Sensors positioniert ist.

6. Tragbares elektronisches Gerät (101) nach Anspruch 5, wobei die Befehle so konfiguriert sind, dass sie, wenn sie von dem mindestens einen Prozessor (120) ausgeführt werden, das tragbare elektronische Gerät (101) dazu veranlassen, eine zweite Korrektur durchzuführen, indem es in Bezug auf die x-Achse einen Abschnitt (1110, 1111, 1120), in dem eine Variation der Magnetkraftdaten (910, 911, 912) eine negative Zahl ist, der erstkorrigierten Magnetkraftdaten (910, 911, 912) in der x-Achsenrichtung symmetrisch verschiebt.

7. Tragbares elektronisches Gerät (101) nach Anspruch 6, wobei die Befehle so konfiguriert sind, dass sie, wenn sie von dem mindestens einen Prozessor (120) ausgeführt werden, das tragbare elektronische Gerät (101) dazu veranlassen:
eine Variation in den zweitkorrigierten Magnetkraftdaten (910, 911, 912) in der x-Achsenrichtung und eine Variation in den Magnetkraftdaten (910, 911, 912) in der z-Achsenrichtung zu vergleichen; und
die Beziehungsinformationen des Abstands (640, 641, 642) zwischen der ersten Anzeige (530) und der zweiten Anzeige (531) auf der Grundlage von Magnetkraftdaten (910, 911, 912) in einer Richtung, in der eine Variation der Magnetkraftdaten (910, 911, 912) unter den zweitkorrigierten Magnetkraftdaten (910, 911, 912) in der x-Achsenrichtung und den Magnetkraftdaten (910, 911, 912) in der z-Achsenrichtung größer ist, zu erhalten.

8. Tragbares elektronisches Gerät (101) nach einem der Ansprüche 1 bis 7, wobei die Befehle so konfiguriert sind, dass sie, wenn sie von dem mindestens einen Prozessor (120) ausgeführt werden, das tragbare elektronische Gerät (101) dazu veranlassen, die Magnetkraftdaten (910, 911, 912, 920, 930) in den mehreren Richtungen zur Aktualisierung der Beziehung zu verwenden, die erhalten wird, während sich der Magnet (520) vom ersten Ende (611, 614, 617) zum zweiten Ende (612, 615, 618) des vorgegebenen Bereichs bewegt, als Reaktion auf den Empfang einer Benutzereingabe zur Aktualisierung der Beziehungsinformationen zwischen den Magnetkraftdaten (910, 911, 912, 920, 930) in den mehreren Richtungen und dem Abstand (640, 641, 642) zwischen der ersten Anzeige (530) und der zweiten Anzeige (531).

9. Tragbares elektronisches Gerät nach einem der Ansprüche 1 bis 8, wobei die Befehle so konfiguriert sind, dass sie, wenn sie von dem mindestens einen Prozessor (120) ausgeführt werden, das tragbare elektronische Gerät (101) dazu veranlassen, eine Benutzerführungsschnittstelle (177), UI, (1310, 1510) zum Aktualisieren der Beziehungsinformationen auf der ersten Anzeige (530) und/oder der zweiten Anzeige (531) als Reaktion auf den Empfang der Benutzereingabe anzuzeigen (321, 530, 531).

10. Tragbares elektronisches Gerät (101) nach einem der Ansprüche 1 bis 9, wobei die Befehle so konfiguriert sind, dass sie, wenn sie von dem mindestens einen Prozessor (120) ausgeführt werden, das tragbare elektronische Gerät (101) dazu veranlassen:
Magnetkraftdaten (910, 911, 912) durch den Hall-Sensor als Reaktion darauf, dass der Abstand (640, 641, 642) zwischen der ersten Anzeige (530) und der zweiten Anzeige (531) durch eine Benutzereingabe eingestellt wird, zu erfassen;
den eingestellten Abstand (640, 641, 642) zwischen der ersten Anzeige (530) und der zweiten Anzeige (531) auf der Grundlage der erfassten Magnetkraftdaten (910, 911, 912) und der erhaltenen Beziehungsinformationen zu erhalten; und
ein Bild auf der ersten Anzeige (530) und/oder der zweiten Anzeige (531) auf der Grundlage des eingestellten Abstands (640, 641, 642) anzuzeigen (321, 530, 531).

11. Verfahren zum Steuern eines tragbaren elektronischen Geräts (101) mit:
einem Hall-Sensor;
einem Magneten (520);
einer ersten Anzeige (530);
einer zweiten Anzeige (531), die neben der ersten Anzeige (530) angeordnet ist;
mindestens einem Prozessor (120); und
einem Speicher (130), in dem Befehle gespeichert sind;
wobei der Magnet (520) so konfiguriert ist, dass er in einer ersten Richtung (620) parallel zu einer Richtung, in der die erste Anzeige (530) und die zweite Anzeige (531) angeordnet sind, innerhalb eines vorgegebenen Bereichs in Bezug auf den Hall-Sensor beweglich ist, wobei die erste Anzeige (530) und die zweite Anzeige (531) mit dem Magneten (520) derart verriegelt sind, dass die Position des Magneten (520) und der Abstand zwischen der ersten Anzeige (530) und der zweiten Anzeige (531) voneinander abhängig sind,
wobei das Verfahren Folgendes umfasst:
Erhalten (710) von Magnetkraftdaten (910, 911, 912) in mehreren Richtungen durch den Hall-Sensor, während sich ein Magnet (520) des tragbaren elektronischen Geräts (101) von einem ersten Ende (611, 614, 617) zu einem zweiten Ende (612, 615, 618) eines vorgegebenen Bereichs in Bezug auf einen Hall-Sensor des tragbaren elektronischen Geräts (101) bewegt; und
Erhalten (720) von Beziehungsinformationen zwischen Magnetkraftdaten (910, 911, 912, 920, 930) in den mehreren Richtungen und dem Abstand (640, 641, 642) zwischen der ersten Anzeige (530) und der zweiten Anzeige (531) auf der Grundlage von Magnetkraftdaten (910, 911, 912) in der ersten Richtung (620) und Magnetkraftdaten (920, 930) in einer zweiten Richtung unter den Magnetkraftdaten (910, 911, 912, 920, 930) in den mehreren Richtungen.

12. Verfahren nach Anspruch 11, wobei aufgrund der Positionierung des Magneten (520) am ersten Ende (611, 614, 617) die erste Anzeige (530) und die zweite Anzeige (531) so angeordnet sind, dass der Abstand (640, 641, 642) zwischen der ersten Anzeige (530) und der zweiten Anzeige (531) am kürzesten ist,
wobei aufgrund der Positionierung des Magneten (520) am zweiten Ende (612, 615, 618) die erste Anzeige (530) und die zweite Anzeige (531) so angeordnet sind, dass der Abstand (640, 641, 642) zwischen der ersten Anzeige (530) und der zweiten Anzeige (531) am größten ist, und
wobei die Position des Magneten durch einen Motor verändert wird.

13. Verfahren nach Anspruch 11 oder 12, wobei das Erhalten der Beziehungsinformationen zwischen den Magnetkraftdaten (910, 911, 912) und dem Abstand (640, 641, 642) zwischen der ersten Anzeige (530) und der zweiten Anzeige (531) das Erhalten der Beziehungsinformationen zwischen den Magnetkraftdaten (910, 911, 912, 920, 930) in den mehreren Richtungen und dem Abstand (640, 641, 642) zwischen der ersten Anzeige (530) und der zweiten Anzeige (531) basierend auf Magnetkraftdaten (910, 911, 912) in einer Richtung, in der eine Variation der Magnetkraftdaten (910, 911, 912) unter den Magnetkraftdaten (910, 911, 912) in der ersten Richtung (620) und den Magnetkraftdaten (910, 911, 912) in der zweiten Richtung größer ist, umfasst.

14. Verfahren nach einem der Ansprüche 11 bis 13, wobei die erste Richtung (620) eine x-Achsenrichtung und die zweite Richtung eine z-Achsenrichtung von einer Innenseite des tragbaren elektronischen Geräts (101) zu einer Außenseite des tragbaren elektronischen Geräts (101) ist.

15. Verfahren nach Anspruch 14, umfassend ferner das Durchführen einer ersten Korrektur an Magnetkraftdaten (910, 911, 912) in der x-Achsenrichtung unter den Magnetkraftdaten (910, 911, 912, 920, 930) in den mehreren Richtungen, so dass die Magnetkraftdaten (910, 911, 912) in der x-Achsenrichtung 0 werden, wenn der Magnet (520) in einer Mitte (610, 613, 616, 940) des Hall-Sensors positioniert ist.

## Revendications

1. Dispositif électronique portable (101), comprenant :
un capteur hall ;
un aimant (520) ;
un premier afficheur (530) ;
un second afficheur (531) disposé côte à côte avec le premier afficheur (530) ;
au moins un processeur (120) ; et
une mémoire (130) stockant des instructions ;
dans lequel l'aimant (520) est configuré pour être mobile dans une première direction (620) parallèle à une direction dans laquelle le premier afficheur (530) et le second afficheur (531) sont disposés, à l'intérieur d'une plage spécifiée par rapport au capteur hall, dans lequel le premier afficheur (530) et le second afficheur (531) sont imbriqués avec l'aimant (520) de sorte que la position de l'aimant (520) et la distance entre le premier afficheur (530) et le second afficheur (531) soient interdépendantes,
dans lequel les instructions sont configurées pour , une fois exécutées par l'au moins un processeur (120), amener le dispositif électronique portable (101) à :
obtenir (710) des données de force magnétique (910, 911, 912) dans une pluralité de directions via le capteur hall lorsque l'aimant (520) se déplace à partir d'une première extrémité (611, 614, 617) à une seconde extrémité (612, 615, 618) de la plage spécifiée ; et
obtenir (720) une information de relation entre des données de force magnétique (910, 911, 912, 920, 930) dans la pluralité de directions et une distance (640, 641, 642) entre le premier afficheur (530) et le second afficheur (531), sur la base de données de force magnétique (910, 911, 912) dans la première direction (620) et de données de force magnétique (920, 930) dans une seconde direction parmi les données de force magnétique (910, 911, 912, 920, 930) dans la pluralité de directions.

2. Dispositif électronique portable (101) selon la revendication 1, dans lequel sur la base de l'aimant (520) étant positionné sur la première extrémité (611, 614, 617), le premier afficheur (530) et le second afficheur (531) sont disposés afin que la distance (640, 641, 642) entre le premier afficheur (530) et le second afficheur (531) soit la plus courte,
dans lequel sur la base de l'aimant (520) étant positionné sur la seconde extrémité (612, 615, 618), le premier afficheur (530) et le second afficheur (531) sont disposés afin que la distance (640, 641, 642) entre le premier afficheur (530) et le second afficheur (531) soit la plus longue, et
dans lequel la position de l'aimant est changée par un moteur.

3. Dispositif électronique portable (101) selon la revendication 1 ou 2, dans lequel les instructions sont configurées pour, une fois exécutées par l'au moins un processeur (120), amener le dispositif électronique portable (101) pour obtenir l'information de relation entre les données de force magnétique (910, 911, 912, 920, 930) dans la pluralité de directions et la distance (640, 641, 642) entre le premier afficheur (530) et le second afficheur (531), sur la base de données de force magnétique (910, 911, 912) dans une direction dans laquelle une variation de données de force magnétique (910, 911, 912) est supérieure parmi les données de force magnétique (910, 911, 912) dans la première direction (620) et les données de force magnétique (910, 911, 912) dans la seconde direction.

4. Dispositif électronique portable (101) selon l'une quelconque des revendications 1 à 3, dans lequel la première direction (620) est une direction de d'axe x, et la seconde direction est une direction d'axe z à partir d'un intérieur du dispositif électronique portable (101) à un extérieur du dispositif électronique portable (101).

5. Dispositif électronique portable (101) selon la revendication 4, dans lequel les instructions sont configurées pour, une fois exécutées par l'au moins un processeur (120), amener le dispositif électronique portable (101) à effectuer une première corrélation sur des données de force magnétique (910, 911, 912) dans la direction d'axe x parmi les données de force magnétique (910, 911, 912, 920, 930) dans la pluralité de directions afin que les données de force magnétique (910, 911, 912) dans la direction d'axe x deviennent 0 quand l'aimant (520) est positionné dans un centre (610, 613, 616, 940) du capteur hall.

6. Dispositif électronique portable (101) selon la revendication 5, dans lequel les instructions sont configurées pour, une fois exécutées par l'au moins un processeur (120), amener le dispositif électronique portable (101) à effectuer une seconde corrélation, par rapport à un axe x, en déplaçant symétriquement une section (1110, 1111, 1120), dans laquelle une variation des données de force magnétique (910, 911, 912) est un nombre négatif, des données de force magnétique (910, 911, 912) corrigées pour la première fois dans la direction d'axe x.

7. Dispositif électronique portable (101) selon la revendication 6, dans lequel les instructions est configurée pour, une fois exécutées par l'au moins un processeur (120), amener le dispositif électronique portable (101) à :
comparer une variation dans les données de force magnétique (910, 911, 912) corrigées pour la seconde fois dans la direction d'axe x et une variation dans les données de force magnétique (910, 911, 912) dans la direction d'axe z ; et
obtenir l'information de relation de la distance (640, 641, 642) entre le premier afficheur (530) et le second afficheur (531), sur la base des données de force magnétique (910, 911, 912) dans une direction dans laquelle une variation de données de force magnétique (910, 911, 912) est supérieure, parmi les données de force magnétique (910, 911, 912) corrigées pour la seconde fois dans la direction d'axe x et les données de force magnétique (910, 911, 912) dans la direction d'axe z.

8. Dispositif électronique portable (101) selon l'une quelconque des revendications 1 à 7, dans lequel les instructions sont configurées pour, une fois exécutées par l'au moins un processeur (120), amener le dispositif électronique portable (101) à utiliser les données de force magnétique (910, 911, 912, 920, 930) dans la pluralité de directions pour mettre à jour la relation, obtenues lorsque l'aimant (520) se déplace à partir de la première extrémité (611,614, 617) pour la seconde extrémité (612, 615, 618) de la plage spécifiée, en réponse à une réception d'une entrée utilisateur pour mettre à jour l'information de relation entre des données de force magnétique (910, 911, 912, 920, 930) dans la pluralité de directions et la distance (640, 641, 642) entre le premier afficheur (530) et le second afficheur (531).

9. Dispositif électronique portable selon l'une quelconque des revendications 1 à 8, dans lequel les instructions sont configurées pour, une fois exécutées par l'au moins un processeur (120), amener le dispositif électronique portable (101) à afficher (321, 530, 531) une interface utilisateur de guidage (177), UI, (1310, 1510) pour mettre à jour l'information de relation sur le premier afficheur (530) et/ou le second afficheur (531) en réponse à une réception de l'entrée utilisateur.

10. Dispositif électronique portable (101) selon l'une quelconque des revendications 1 à 9, dans lequel les instructions sont configurées pour, une fois exécutées par l'au moins un processeur (120), amener le dispositif électronique portable (101) à :
détecter des données de force magnétique (910, 911, 912) via le capteur hall en réponse à la distance (640, 641, 642) entre le premier afficheur (530) et le second afficheur (531) étant ajustée par une entrée utilisateur ;
obtenir la distance (640, 641, 642) ajustée entre le premier afficheur (530) et le second afficheur (531) sur la base des données de force magnétique (910, 911, 912) détectées et l'information de relation obtenue ; et
afficher (321, 530, 531) une image sur le premier afficheur (530) et/ou le second afficheur (531) sur la base de la distance (640, 641, 642) ajustée.

11. Procédé pour contrôler un dispositif électronique portable (101) comprenant :
un capteur hall ;
un aimant (520) ;
un premier afficheur (530) ;
un second afficheur (531) disposé côte à côte avec le premier afficheur (530) ;
au moins un processeur (120) ; et
une mémoire (130) stockant des instructions ;
dans lequel l'aimant (520) est configuré pour être mobile dans une première direction (620) parallèle à une direction dans laquelle le premier afficheur (530) et le second afficheur (531) sont disposés, à l'intérieur d'une plage spécifiée par rapport au capteur hall, dans lequel le premier afficheur (530) et le second afficheur (531) sont imbriqués avec l'aimant (520) de sorte que la position de l'aimant (520) et la distance entre le premier afficheur (530) et le second afficheur (531) soient interdépendantes,
dans lequel le procédé consiste à :
obtenir (710), lorsqu'un aimant (520) du dispositif électronique portable(101) se déplace à partir d'une première extrémité (611, 614, 617) à une seconde extrémité (612, 615, 618) d'une plage spécifiée par rapport à un capteur hall du dispositif électronique portable(101), des données de force magnétique (910, 911, 912) dans une pluralité de directions via le capteur hall ; et
obtenir (720) une information de relation entre des données de force magnétique (910, 911, 912, 920, 930) dans la pluralité de directions et la distance (640, 641, 642) entre le premier afficheur (530) et le second afficheur (531), sur la base de données de force magnétique (910, 911, 912) dans la première direction (620) et de données de force magnétique (920, 930) dans une seconde direction parmi les données de force magnétique (910, 911, 912, 920, 930) dans la pluralité de directions.

12. Procédé selon la revendication 11, dans lequel sur la base de l'aimant (520) étant positionné sur la première extrémité (611, 614, 617), le premier afficheur (530) et le second afficheur (531) sont disposés afin que la distance (640, 641, 642) entre le premier afficheur (530) et le second afficheur (531) soit la plus courte,
dans lequel sur la base de l'aimant (520) étant positionné sur la seconde extrémité (612, 615, 618), le premier afficheur (530) et le second afficheur (531) sont disposés afin que la distance (640, 641, 642) entre le premier afficheur (530) et le second afficheur (531) soit la plus longue, et
dans lequel la position de l'aimant est changée par un moteur.

13. Procédé selon la revendication 11 ou 12, dans lequel une obtention de l'information de relation entre les données de force magnétique (910, 911, 912) et la distance (640, 641, 642) entre le premier afficheur (530) et le second afficheur (531) comporte l'obtention de l'information de relation entre les données de force magnétique (910, 911, 912, 920, 930) dans la pluralité de directions et la distance (640, 641, 642) entre le premier afficheur (530) et le second afficheur (531), sur la base de données de force magnétique (910, 911, 912) dans une direction dans laquelle une variation de données de force magnétique (910, 911, 912) est supérieure parmi les données de force magnétique (910, 911, 912) dans la première direction (620) et les données de force magnétique (910, 911, 912) dans la seconde direction.

14. Procédé selon l'une quelconque des revendications 11 à 13, dans lequel la première direction (620) est une direction de d'axe x, et la seconde direction est une direction d'axe z à partir d'un intérieur du dispositif électronique portable (101) à un extérieur du dispositif électronique portable (101).

15. Procédé selon la revendication 14, consistant en outre à effectuer une première corrélation sur des données de force magnétique (910, 911, 912) dans la direction d'axe x parmi les données de force magnétique (910, 911, 912, 920, 930) dans la pluralité de directions afin que les données de force magnétique (910, 911, 912) dans la direction d'axe x deviennent 0 quand l'aimant (520) est positionné dans un centre (610, 613, 616, 940) du capteur hall.
